(19) Europäisches Patentamt
European Patent Office
Office européen des brevets

(11) **EP 2 028 537 A1**

(12) **EUROPEAN PATENT APPLICATION**

(43) Date of publication:
**25.02.2009 Bulletin 2009/09**

(51) Int Cl.:
**G02F 1/13357** (2006.01)      **G02B 3/00** (2006.01)
**G02B 5/04** (2006.01)

(21) Application number: **08014914.9**

(22) Date of filing: **22.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.08.2007 JP 2007217528**
**15.07.2008 JP 2008183784**

(71) Applicant: **Sony Corporation**
**Tokyo 108-0075 (JP)**

(72) Inventors:
• **Shinkai, Shogo**
**Tokyo, 108-0075 (JP)**

• **Yamakita, Shigehiro**
**Tokyo, 108-0075 (JP)**
• **Omura, Taro**
**Tokyo, 108-0075 (JP)**
• **Ishimori, Taku**
**Tokyo, 108-0075 (JP)**
• **Ohta, Eiji**
**Tokyo, 108-0075 (JP)**

(74) Representative: **Müller - Hoffmann & Partner**
**Patentanwälte**
**Innere Wiener Strasse 17**
**81667 München (DE)**

(54) **Surface light emitting device and liquid crystal display device using the same**

(57)    A surface emitting device (10) includes a plurality of light sources (12) disposed on an identical plane, an optical element (15) having translucent properties and having formed thereon a luminance distribution-forming layer (18) for suppressing luminance variations of a light emitted from the plurality of light sources, a reflective surface (13a) for reflecting a light emitted from the plurality of light sources (12), the reflective surface (13a) being disposed opposite to the optical element (15) by sandwiching the plurality of light sources (12) with an air layer in between the reflective surface (13a) and the optical element (15); and a diffuser means (14) for diffusing the light emitted from the plurality of light sources (12), the diffuser means (14), being disposed opposite to the plurality of light sources (12) by sandwiching the optical element (15).

FIG. 1

EP 2 028 537 A1

**Description**

BACKGROUND OF THE INVENTION

Field of the Invention

Embodiments of the present invention relate to a technical field of a surface emitting device and a liquid crystal display device. More particularly, the present invention relates to a technical field in which the front luminance in a predetermined position between light sources is caused to have a minimum value in a predetermined range, thereby suppressing uneven luminance in a state viewed from the all directions.

Description of Related Art

A liquid crystal display device having a backlight (surface emitting device) has been used as a display device such as, word processor, laptop personal computer, and the like. Since reduction in weight and thickness of the surface emitting device of liquid crystal display device is required, an edge light-type backlight having a linear light source, such as a fluorescent tube, disposed on the side of a transparent plate (light guide plate) and having a liquid crystal display panel disposed on the light guide plate, has been a mainstream.

However, recently, as liquid crystal display devices, such as those for television use, are increased in size, luminance tends to be insufficient by use of the edge light-type backlight, and therefore, a direct-below type backlight having a linear light source disposed directly below a liquid crystal display panel comes to be widely used.

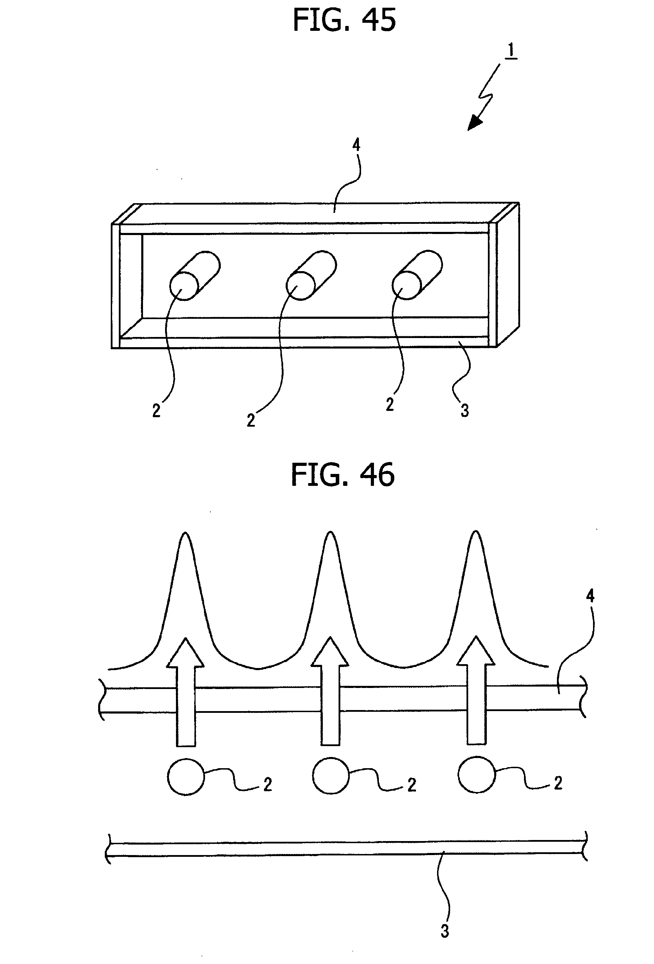

FIG. 45 is a perspective view showing the schematic configuration of a related art direct-below type backlight device 1. The backlight device 1 includes light sources (linear light sources) 2, 2, ... of fluorescent tubes et al, a reflection plate 3, and a diffusion plate 4.

With respect to the light sources (linear light sources) 2, 2, ..., for example, cold cathode fluorescent tubes (CCFLs), et al are used, and the light sources are formed in a cylindrical shape extending in a predetermined direction.

The reflection plate 3 is disposed for reusing the light reflected from the diffusion plate 4 or the like, or the light emitted from the light sources 2, 2, ... but not reached the diffusion plate 4.

The diffusion plate 4 is an optical element having a thickness at least 1mm or more, and diffusing properties and dispersing properties of the diffusion plate are improved by causing a transparent substrate to randomly contain a resin having a refractive index different from that of the transparent substrate. It is used as an optical element for suppressing variations of the front luminance distribution.

In the backlight device 1, the reflection plate 3 and the diffusion plate 4 are disposed opposite to each other by sandwiching the light sources 2, 2, ....

In the backlight device 1, the light emitted from the light sources 2, 2, ... is outputted from the diffusion plate 4, but, when the distance between the light sources 2, 2, ... and the diffusion plate 4 is reduced or the distance between the light sources 2, 2, ... is increased, the luminance of irradiation light fluxes of the backlight device 1 are, as shown in FIG. 46, high at a positions which is directly above the light sources 2, 2, ... and low at a position which is between the light sources 2, 2, ..., and accordingly, the front luminance distribution becomes uneven, and variations in the luminance are caused.

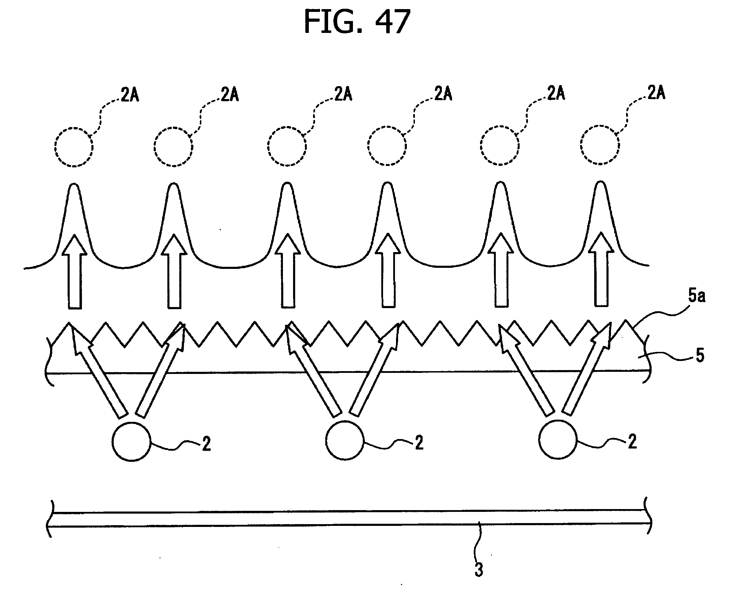

In order to suppress such luminance variations, as shown in FIG. 47, it is known that instead of the diffusion plate 4, an optical sheet 5, such as a prism sheet or a lenticular lens sheet, is disposed (see, for example, Japanese Patent Application Publication No. JP 5-333333, Patent Document 1, Japanese Patent Application Publication No. JP 6-250178, Patent Document 2, Japanese Patent Application Publication No. JP 10-283818, Patent Document 3, and Japanese Patent Application Publication No. JP 2004-6256, Patent Document 4). FIG. 47 shows an example in which the optical element (prism sheet) 5 is disposed instead of the diffusion plate 4 shown in FIG. 46.

The optical element (prism sheet) 5 typically used as a luminance improvement sheet includes a plurality of linear protrusions (prisms) having triangle shapes and continuously formed on the front surface or back surface of the optical element at a regular pitch. These linear protrusions function as a luminance distribution-forming layer 5a for suppressing the luminance variations in the optical axis direction of the light outputted from the light sources 2, 2, ....

The optical element 5 is disposed such that the direction of the ridge line of the linear protrusions functioning as a luminance distribution-forming layer 5a coincides with the longitudinal direction of the light sources 2, 2, .... By using the optical element 5, as shown in FIG. 47, the irradiation light fluxes to be outputted are individually divided into a plurality of fluxes as the divided images 2A, 2A, ... of the light sources, thus suppressing the front luminance variations. FIG. 47 shows an example in which the divided images 2A, 2A, ... of the light sources are increased to twice of divided images of the light sources 2, 2, ...by the optical element 5 .

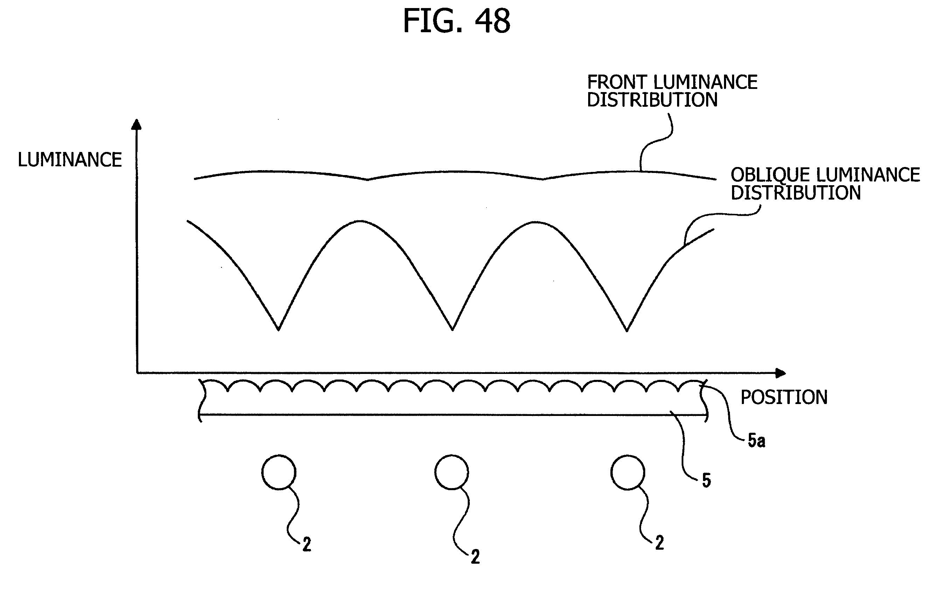

With respect to the surface emitting device 1 shown in FIG. 47, variations of the luminance as viewed from the front side (front luminance) are suppressed, as shown in FIG. 48, but when viewed from the oblique side, luminance variations are caused, and thereby causing a problem of the uneven luminance distribution. FIG. 48 shows an example in which, as the optical element 5, a prism sheet having a luminance distribution-forming layer provided with a plurality of structure portions (linear protrusions) each having a shape of heptagon is used, and the luminance distribution as viewed from oblique side on the optical element 5 (hereinafter, referred to as "oblique luminance distribution") is uneven.

For solution of the uneven oblique-luminance distribution, for example, there is a method in which a plurality of diffuser sheets are stacked on one another and disposed on a prism sheet, but in this method, since a plurality of diffuser sheets are stacked, there is an issue of a great loss of the luminance of the light from the light sources, or the like.

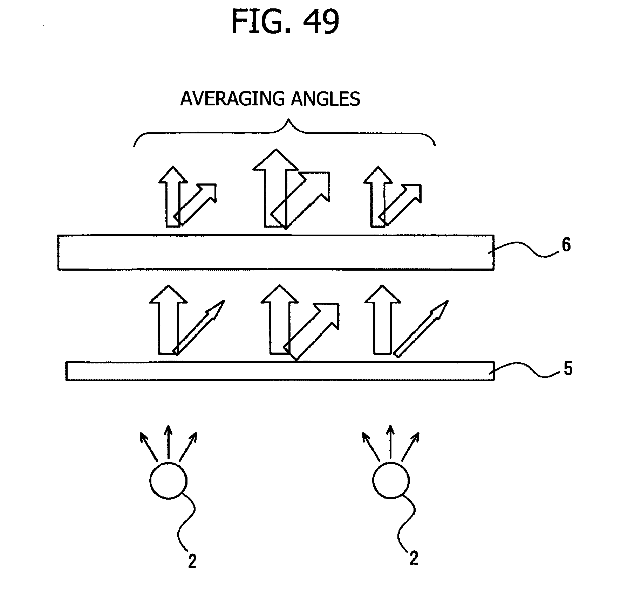

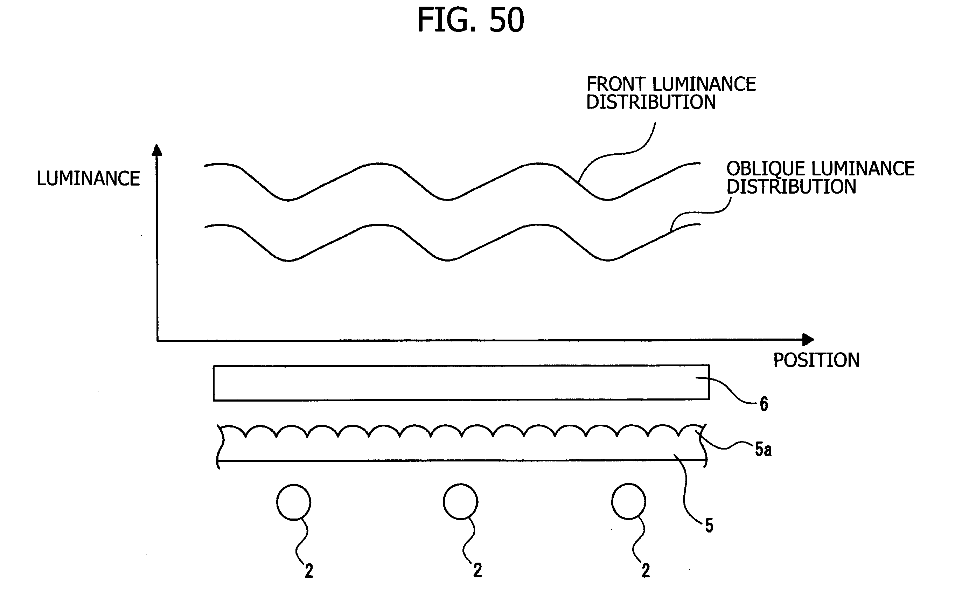

Further, for solution of the uneven oblique luminance distribution, there is a method in which, for example, as shown in FIG. 49, a diffuser sheet 6 having high diffusing function is used. However, in this method, the diffuser sheet 6 having high diffusing function averages the angle distribution of the irradiation light fluxes outputted from the optical element (prism sheet) 5, and therefore, as shown in FIG. 50, even though the uneven oblique luminance distribution is improved, evenness of the front luminance distribution is lowered.

Accordingly, it is desirable to provide a surface emitting device and a liquid crystal display device of the present invention which can solve the issues and suppress uneven luminance as viewed from the all directions.

SUMMARY OF THE INVENTION

According to an embodiment of the present invention, the surface emitting device includes a plurality of light sources disposed on the identical plane, an optical element having light transmission properties and having formed thereon a luminance distribution-forming layer for
suppressing luminance variations of the light emitted from a plurality of light sources, a reflective surface for reflecting the light emitted from the plurality of light sources, the reflective surface being disposed opposite to the optical element by sandwiching the plurality of light sources with an air layer in between the reflective surface and the optical element, and a diffuser means for diffusing the light emitted from the plurality of light sources, the diffuser means being disposed opposite to the plurality of the light sources by sandwiching the optical element. Based on assumption that light source distance $L$ represents a distance between the centers of each light sources adjacent to each other, optical-axial direction distance $H$ represents a distance from the center of the light source to the optical element in the optical axis direction, moving distance $x$ represents a distance in the direction from the light source to the adjacent light source, $\phi$ represents front luminance on the optical element of light emitted from the light source and passing the optical element, and $\phi_{max}$ represents the maximum value of the front luminance $\phi$ on the optical element, when $L/H$ is in the range from 1.8 to 2.3, the front luminance under $x = L/2$ takes a minimum value $\phi_0$, and the minimum value $\phi_0$ satisfies the following formula: $0.65 \cdot \phi_{max} \leqq \phi_0 \leqq 0.85 \cdot \phi_{max}$.

According to an embodiment of the present invention, another surface emitting device includes a plurality of light sources disposed on the identical plane, an optical element having light transmission properties and having formed thereon a luminance distribution-forming layer for
suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element. Based on assumption that light source distance $L$ represents a distance between the centers of each light sources adjacent to each other, optical-axial direction distance $H$ represents a distance from the center of the light source to the optical element in the optical axis direction, moving distance $x$ represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when $L/H$ is in the range from 2.8 to 4.2, the front luminance $\phi$ under $x = L/2$ takes a minimum value $\phi_0$, the front luminance $\phi$ under $x = 0$ takes a minimum value $\phi_1$, and the following formulas are both satisfied: $0.65 \cdot \phi_{max} \leqq \phi_0 \leqq 0.85 \cdot \phi_{max}$. and $\phi_0 < \phi_1$.

According to an embodiment of the present invention, a liquid crystal display device includes a plurality of light sources disposed on the identical plane, an optical element having light transmission properties and having formed thereon a luminance distribution-forming layer for
suppressing luminance variations of the light outputted from a plurality of light sources, a reflective surface for reflecting the light emitted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element, and a liquid crystal panel displaying an image and irradiated by light outputted from the plurality of light sources. Based on assumption that light source distance $L$ represents a distance between the centers of each light sources adjacent to each other, optical-axial direction distance $H$ represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 1.8 to 2.3, the front luminance $\phi$ under x = L/2 takes a minimum value $\phi_0$, and the minimum value $\phi_0$ satisfies the following formula:

$$0.65 \cdot \phi_{max} \leqq \phi_0 \leqq 0.85 \cdot \phi_{max}.$$

According to an embodiment of the present invention, another liquid crystal display device includes a plurality of light sources disposed on the identical plane, an optical element having light transmission properties and having formed thereon a luminance distribution-forming layer for suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element, and a liquid crystal panel displaying an image and irradiated by light outputted from the plurality of light sources. Based on assumption that light source distance L represents a distance between the centers of each light sources adjacent to each other, optical-axial direction distance H represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 2.8 to 4.2, the front luminance $\phi$ under x = L/2 takes a minimum value $\phi_0$, the front luminance $\phi$ under x = 0 takes a minimum value $\phi_1$ and the following formulas are satisfied:

$$0.65 \cdot \phi_{max} \leqq \phi_0 \leqq 0.85 \cdot \phi_{max} \text{ and } \phi_0 < \phi_1.$$

Therefore, in the surface emitting device and liquid crystal display device, a maximum value of the luminance as viewed from oblique side and a minimum value of the front luminance are present at substantially the same position in respect of a moving distance from the light sources.

According to an embodiment of the present invention, another surface emitting device includes a plurality of light sources disposed on the identical plane, an optical element having light transmission properties and having formed thereon a luminance distribution-forming layer for suppressing luminance variations of light outputted from the plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of light sources by sandwiching the optical element. Based on assumption that the luminance distribution-forming layer of the optical element is constituted of a plurality of structure portions protruding in the optical axis direction of the light outputted from the light sources and lined with the array direction of the plurality of light sources, light source distance L represents a distance between the centers of the light sources adjacent to each other, optical-axial distance H represents a distance from the center of the light source to the optical element in the optical axis direction, moving distance x represents a distance in the direction from the light source to the adjacent light source, and $\psi$ represents a tangent angle formed between a tangent line tangent to the outer surface of a structure portion and a plane perpendicular to the optical axis, in a cross-section at the direction lined with the structure portions of the luminance distribution-forming layer, when L/H is in the range of from 2.8 to less than 3.5, with respect to the outer surfaces of the cross-sections of the structure portions in direction lined with the structure portions, the ratio Q of a portion having a tangent line angle $\psi$, in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula: $0.37 \leqq Q \leqq 0.70$.

According to an embodiment of the present invention, another liquid crystal display device includes a plurality of light sources disposed on the identical plane, an optical element having light transmission properties and having formed thereon a luminance distribution-forming layer for suppressing luminance variations of light outputted from the plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of light sources by sandwiching the optical element, and a liquid crystal panel displaying an image and irradiated by light outputted from the plurality of light sources. Based on assumption that the luminance distribution-forming layer of the optical element is constituted of a plurality of structure portions protruding in the optical axis direction of the light outputted from the light sources and lined with the array direction of the plurality of light sources, light source distance L represents a distance between the centers of the light sources adjacent to each other, optical-axial distance H represents a distance from the center of the light source to the optical element in the optical axis direction, moving distance x represents a distance in the direction from the light source to the adjacent light source, and $\psi$ represents a tangent angle formed between a tangent line tangent to the outer surface of a structure portion and a plane perpendicular to the optical axis, in a cross-section at the direction lined with the structure portions of the luminance distribution-forming layer, when L/H is in the range of from 2.8 to less than 3.5, with respect to the outer surfaces of the cross-sections of the structure portions in direction lined with the structure portions, the ratio Q of a portion having a tangent line angle $\psi$, in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula: $0.37 \leqq Q \leqq 0.70$.

Therefore, in another surface emitting device and another liquid crystal display device, a maximum value of the luminance as viewed from oblique side and a minimum value of the front luminance are present at substantially the same position in respect of a moving distance from the light sources.

BRIEF DESCRIPTION OF THE DRAWINGS

FIG. 1 shows the best mode for using the surface emitting device and liquid crystal display device of the present invention, together with FIGs. 2 to 44, and FIG. 1 is a schematic perspective view showing a liquid crystal display device;

FIG. 2 is a schematic view showing the passage of light outputted from a light source and the positional relation between the individual parts;

FIG. 3 is a schematic view showing a tangent line angle for a structure portion in a luminance distribution-forming layer;

FIG. 4 is a graph showing the luminance distribution on an optical element of light from light sources;

FIG. 5 is a graph showing the luminance distribution on a diffuser means of light from light sources;

FIG. 6 is a schematic view showing the luminance distribution when light is outputted from a single light source and a synthesized luminance distribution;

FIG. 7 shows a shape example of the luminance distribution, together with FIGs. 8 to 10, and FIG. 7 is a schematic view showing an example of a shape of substantial triangle having a rounded top;

FIG. 8 is a schematic view showing an example of a shape having a step portion in its slope;

FIG. 9 is a schematic view showing an example in which the luminance level has minimum values at positions immediately above the light sources;

FIG. 10 is a schematic view showing an example in which the luminance level is substantially constant at positions immediately above the light sources;

FIG. 11 is a graph showing the relation between a ratio of the light sources distance L to the optical-axial distance H (L/H) and the maximum tangent line angle a;

FIG. 12 is a graph showing the relation between a moving distance x and maximum tangent line angle a;

FIG. 13 is a schematic view showing respective examples of cross-sections of the structure portions in the luminance distribution-forming layer, in which, when L/H = 2.0, the luminance distribution as viewed from any angle is substantially constant, irrespective of a moving distance x;

FIG. 14 is a graph showing the relation between a tangent line angle $\psi$ and a ratio of tangent line angles equal to or larger than the tangent line angle $\psi$ with respect to the shape examples shown in FIG. 13;

FIG. 15 is a schematic view showing respective examples of cross-sections of the structure portions in the luminance distribution-forming layer, in which, when L/H = 2.0, the luminance distribution as viewed from any angle is not substantially constant;

FIG. 16 is a graph showing the relation between a tangent line angle $\psi$ and a ratio of tangent line angles equal to or larger than the tangent line angle ψ with respect to the shape examples shown in FIG. 15;

FIG. 17 is a table listing each data for the shape examples shown in FIGs. 13 to 16;

FIG. 18 is a schematic view showing respective examples of cross-sections of the structure portions in the luminance distribution-forming layer, in which, when L/H = 3.0, the luminance distribution as viewed from any angle is substantially constant, irrespective of a moving distance x;

FIG. 19 is a graph showing the relation between a tangent line angle ψ and a ratio of tangent line angles equal to or larger than the tangent line angle ψ with respect to the shape examples shown in FIG. 18;

FIG. 20 is a schematic view showing respective examples of cross-sections of the structure portions in the luminance distribution-forming layer, in which, when L/H = 3.0, the luminance distribution as viewed from any angle is not substantially constant;

FIG. 21 is a graph showing the relation between a tangent line angle ψ and a ratio of tangent line angles equal to or larger than the tangent line angle ψ with respect to the shape examples shown in FIG. 20;

FIG. 22 is a table listing each data for the shape examples shown in FIGs. 18 to 21;

FIG. 23 is a schematic view showing respective examples of cross-sections of the structure portions in the luminance distribution-forming layer, in which, when L/H = 4.0, the luminance distribution as viewed from any angle is substantially constant, irrespective of a moving distance x;

FIG. 24 is a graph showing the relation between a tangent line angle ψ and a ratio of tangent line angles equal to or larger than the tangent line angle ψ with respect to the shape examples shown in FIG. 23;

FIG. 25 is a schematic view showing respective examples of cross-sections of the structure portions in the luminance distribution-forming layer, in which, when L/H = 4.0, the luminance distribution as viewed from any angle is not substantially constant;

FIG. 26 is a graph showing the relation between a tangent line angle ψ and a ratio of tangent line angles equal to or larger than the tangent line angle ψ with respect to the shape examples shown in FIG. 25;

FIG. 27 is a table listing each data for the shape examples shown in FIGs. 23 to 26;

FIG. 28 is a graph showing the relation between a luminance variation generation ratio (uneven ratio) and L/H when using diffuser means having different total light transmittances T;

FIG. 29 is a graph showing a part of the graph of FIG. 28 by enlarging the part;

FIG. 30 is a graph showing the luminance distribution when using an optical element having a luminance distribution-forming layer constituted of structure portions each having a shape of isosceles triangle;

FIG. 31 is a schematic view showing respective examples of cross-sections of the structure portions in the luminance distribution-forming layer, in which, when L/H is 2.8 to less than 3.5, the luminance distribution as viewed from any angle is substantially constant, irrespective of a moving distance;

FIG. 32 is a graph showing the relation between a tangent line angle ψ and a ratio of tangent line angles equal to or larger than the tangent line angle ψ with respect to the shape examples shown in FIG. 31;

FIG. 33 is a schematic view showing respective examples of cross-sections of the structure portions in the luminance distribution-forming layer, in which, when L/H is 2.8 to less than 3.5, the luminance distribution as viewed from any angle is substantially constant, irrespective of a moving distance;

FIG. 34 is a graph showing the relation between a tangent line angle ψ and a ratio of tangent line angles equal to or larger than the tangent line angle ψ with respect to the two shape examples shown in FIG. 33;

FIG. 35 is a table showing a ratio Q and the generation of luminance variation with respect to the shape examples;

FIG. 36 is a graph showing luminance distributions by comparing them with respect to two shape examples;

FIG. 37 is a diagram showing an example of a luminance distribution-forming layer having a shape of polygon;

FIG. 38 is a diagram showing an example of a luminance distribution-forming layer having two structure portions of polygon shape;

FIG. 39 is a diagram showing another example of a luminance distribution-forming layer having two structure portions of polygon shape;

FIG. 40 is a diagram showing an optical element having two structure portions of polygon shape and a mold for molding the optical element;

FIG. 41 is a schematic view showing an optical element package having an optical element, a diffusion plate, and an optical element group packaged with a packaging member;

FIG. 42 is a schematic view showing a zygotic optical element in which an optical element and a diffusion plate are bonded together;

FIG. 43 is a schematic view showing, together with a diffuser means, an example of an optical element in which part of the structure portions are different in size from the others;

FIG. 44 is a schematic view showing an example of molding of the optical element shown in FIG. 43;

FIG. 45 is a schematic perspective view showing a related art surface emitting device;

FIG. 46 is a schematic view showing an example of the front luminance distribution in a related art surface emitting device, in which the distance between the light sources and the diffusion plate is shortened;

FIG. 47 is a schematic view showing an example of the front luminance distribution in a related art surface emitting device;

FIG. 48 is a schematic view showing an example of the front luminance distribution and oblique luminance distribution in a related art surface emitting device;

FIG. 49 is a schematic view showing an example in which a diffuser sheet having high diffusing functions average the angle distribution of the irradiation light fluxes emitted from the optical element in a related art surface emitting device; and

FIG. 50 is a schematic view showing an issue caused when using a diffuser sheet having high diffusing functions in a related art surface emitting device.

According to an embodiment of the present invention, a surface emitting device includes a plurality of light sources disposed on the identical plane, an optical element having light transmission properties and having formed thereon a luminance distribution-forming layer for

suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element Based on assumption that light source distance L represents a distance between the centers of each light sources adjacent to each other, optical-axial direction distance H represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 1.8 to 2.3, the front luminance $\phi$ under x = L/2 takes a minimum value $\phi_0$, and the following formula is satisfied: $0.65 \cdot \phi_{max} \leqq \phi_0 \leqq 0.85 \cdot \phi_{max}$.

Accordingly, luminance distribution as viewed from all angles becomes almost constant, and whereby unevenness of luminance as viewed from all directions may be suppressed.

According to an embodiment of the present invention, another surface emitting device includes a plurality of light sources disposed on the identical plane, an optical element having light transmission properties and having formed thereon a luminance distribution-forming layer for

suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element. Based on assumption that light source distance L represents a distance between the centers of each light sources adjacent to each other, optical-axial direction distance H represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 2.8 to 4.2, the front luminance $\phi$ under x = L/2 takes a minimum value $\phi_0$, the front luminance $\phi$ under x = 0 takes a minimum value $\phi_1$ and the following formulas are satisfied: $0.65 \cdot \phi_{max} \leqq \phi_0 \leqq 0.85 \cdot \phi_{max}$ and $\phi_0 < \phi_1$.

Accordingly, luminance distributions become almost constant when viewed from all angles, and whereby unevenness of luminance as viewed from all directions may be suppressed.

According to an embodiment of the present invention, a liquid crystal display device includes a plurality of light sources disposed on the identical plane, an optical element having light transmission properties and having formed thereon a luminance distribution-forming layer for

suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of the light sources by sandwiching the optical element, and a liquid crystal panel displaying an image and irradiated by light outputted from the plurality of light sources. Based on assumption that light source distance L represents a distance between the centers of each light sources adjacent to each other, optical-axial direction distance H represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 1.8 to 2.3,

the front luminance $\phi$ under x = L/2 takes a minimum value $\phi_0$, and the following formula is satisfied: $0.65 \cdot \phi_{max} \leqq \phi_0 \leqq 0°85 \cdot \phi_{max}$.

Accordingly, luminance distribution as viewed from all angles become almost constant, and unevenness of luminance as viewed from all directions may be suppressed.

According to an embodiment of the present invention, another liquid crystal display device includes a plurality of light sources disposed on the identical plane, an optical element having light transmission properties and having formed thereon a luminance distribution-forming layer for
suppressing luminance variations of the light outputted from a plurality of light sources, a reflective surface for reflecting the light outputted from the plurality of light sources, the reflective surface being disposed opposite to the optical element by sandwiching the plurality of light sources with an air layer in between the reflective surface and the optical element, a diffuser means for diffusing the light outputted from the plurality of light sources, the diffuser means being disposed opposite to the plurality of the light sources by sandwiching the optical element, and a liquid crystal panel displaying an image and irradiated by light outputted from the plurality of light sources. Based on assumption that light source distance L represents a distance between the centers of each light sources adjacent to each other, optical-axial direction distance H represents a distance from the center of the light source to the optical element in the optical axis direction, moving distance x represents a distance in the direction from the light source to the adjacent light source, $\phi$ represents front luminance on the optical element of light outputted from the light source and passing the optical element, and $\phi_{max}$ represents the maximum value of the front luminance $\phi$ on the optical element, when L/H is in the range from 2.8 to 4.2, the front luminance $\phi$ under x = L/2 takes a minimum value $\phi_0$, the front luminance $\phi$ under x = 0 takes a minimum value $\phi_1$ and the following formulas are satisfied:

$$0.65 \cdot \phi_{max} \; \leqq \; \phi_0 \; \leqq \; 0.85 \cdot \phi_{max} \text{ and } \phi_0 < \phi_1.$$

Accordingly, luminance distribution as viewed from all angles become almost constant, and unevenness of luminance as viewed from all directions may be suppressed.

According to an embodiment of the present invention, another surface emitting device includes a plurality of light sources disposed on the identical plane, an optical element having light transmission properties and having formed thereon a luminance distribution-forming layer for suppressing luminance variations of light outputted from the plurality of light sources, a reflective surface for reflecting the light outputted from the plurality of light sources, the reflective surface being disposed opposite to the optical element by sandwiching the plurality of light sources with an air layer in between the reflective surface and the optical element, and a diffuser means for diffusing the light outputted from the plurality of light sources, the diffuser means being disposed opposite to the plurality of light sources by sandwiching the optical element. Based on assumption that the luminance distribution-forming layer of the optical element is constituted of a plurality of structure portions protruding in the optical axis direction of the light outputted from the light sources and lined with the array direction of the plurality of light sources, light source distance L represents a distance between the centers of the light sources adjacent to each other, optical-axial distance H represents a distance from the center of the light source to the optical element in the optical axis direction, moving distance x represents a distance in the direction from the light source to the adjacent light source, and $\psi$ represents a tangent angle formed between a tangent line tangent to the outer surface of a structure portion and a plane perpendicular to the optical axis, in a cross-section at the direction lined with the structure portions of the luminance distribution-forming layer, when L/H is in the range of from 2.8 to less than 3.5, with respect to the outer surfaces of the cross-sections of the structure portions in direction lined with the structure portions, the ratio Q of a portion having a tangent line angle $\psi$, in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula: $0.37 \leqq Q \leqq 0.70$.

Accordingly, luminance distribution as viewed from all angles become almost constant, and unevenness of luminance as viewed from all directions may be suppressed.

According to an embodiment of the present invention, another liquid crystal display device includes a plurality of light sources disposed on the identical plane, an optical element having light transmission properties and having formed thereon a luminance distribution-forming layer for suppressing luminance variations of light outputted from the plurality of light sources, a reflective surface for reflecting the light outputted from the plurality of light sources, the reflective surface being disposed opposite to the optical element by sandwiching the plurality of light sources with an air layer in between the reflective surface and the optical element, a diffuser means for diffusing the light outputted from the plurality of light sources, the diffuser means being disposed opposite to the plurality of light sources by sandwiching the optical element, and a liquid crystal panel displaying an image and irradiated by light outputted from the plurality of light sources. Based on assumption that the luminance distribution-forming layer of the optical element is constituted of a plurality of structure portions protruding in the optical axis direction of the light outputted from the light sources and lined with the array direction of the plurality of light sources, light source distance L represents a distance between the centers of the light sources adjacent to each other, optical-axial distance H represents a distance from the center of the light source to the optical element in the optical axis direction, moving distance x represents a distance in the direction from the light source to the adjacent light source, and $\psi$ represents a tangent angle formed between a tangent line tangent to the outer surface of a structure portion and a plane perpendicular to the optical axis, in a cross-section at the direction lined with the structure portions of the luminance distribution-forming layer, when L/H is in the range of from 2.8 to less than 3.5, with respect to the outer surfaces of the cross-sections of the structure portions in direction lined with the structure portions, the ratio Q of a portion having a tangent line angle $\psi$ in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula: $0.37 \leqq Q \leqq 0.70$.

Accordingly, luminance distribution as viewed from all angles become almost constant, and unevenness of luminance as viewed from all directions may be suppressed.

DETAILED DESCRIPTION OF THE EMBODIMENT

Below, the best mode for using the surface emitting device and liquid crystal display device of the present invention will be described with reference to the accompanying drawings.

In the best mode described below, the surface emitting device of the present invention is applied to a backlight device for liquid crystal display device. The application range of the surface emitting device of the present invention is not limited to the backlight device of liquid crystal display device, and the surface emitting device can be widely applied to lighting devices for use in other image display devices.

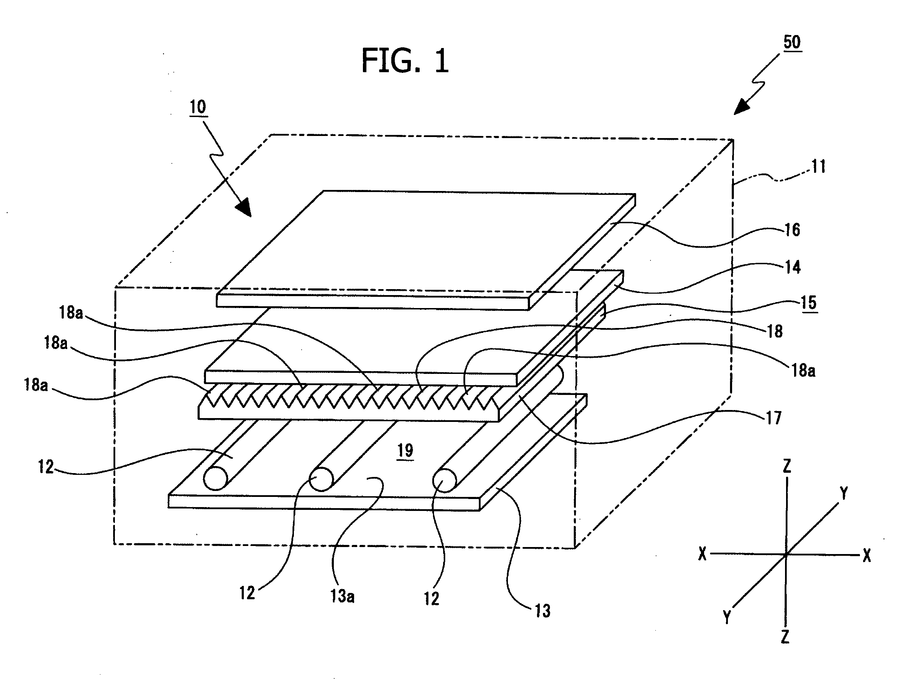

A surface emitting device 10 is used as a direct below-type backlight device in, for example, a liquid crystal display device 50 (see FIG. 1).

The surface emitting device 10 has a configuration in which required parts are respectively disposed in a housing 11, and includes a plurality of light sources (linear light sources) 12, 12, ... , a reflection plate 13, a diffuser means 14, an optical element (optical plate) 15, and an optical element group 16.

With respect to the light sources 12, 12, ..., fluorescent tubes, such as cold cathode fluorescent tubes or hot cathode fluorescent tubes, are used. The light sources 12, 12, ... individually have a cylindrical form and are disposed on the reflection plate 13 so that it extends in the Y direction shown in FIG. 1. The light sources 12, 12, ... are disposed between the reflection plate 13 and the optical element 15 in the X direction shown in FIG. 1 at regular intervals so that the light sources are disposed in parallel state.

In the surface emitting device 10, a plurality of light sources 12, 12, ... are disposed at regular intervals on the reflection plate 13 and uniformity of the arrangement of the light sources is kept. Therefore, the light from the light sources 12, 12, ... , which have reached the below-described liquid crystal display panel, are unlikely to exhibit partially uneven luminance, which is caused due to the arrangement of the light sources 12, 12, ....

A reflective surface 13a is a surface facing the light sources 12, 12, ... of the reflection plate 13. Part of the light from the light sources 12, 12, ... are reflected on the reflective surface 13a and directed toward the optical element 15. For the reflection plate 13, any material having an ability to reflect light can be used, for example, a reflection plate formed of aluminum, polyethylene terephthalate (PET), or polycarbonate can be used.

The diffuser means 14 is disposed opposite to the light sources 12, 12, ... by sandwiching the optical element 15. The diffuser means 14 has a function to diffuse the incident light which has passed through the optical element 15 to render the luminance distribution of the irradiation light fluxes even.

With respect to the diffuser means 14, any materials, such as a diffusion plate or a diffuser sheet in the form of a film are usable as long as light transmission properties and light diffusion functions are provided. The diffuser means 14 formed of, for example, polystyrene, a cycloolefin polymer, acryl, or polycarbonate is used. With respect to the diffuser sheet, materials for supporting diffusion of light, such as filler particles, applied on, e.g., a PET substrate is used. With respect to the diffuser means 14, at least any one of the diffusion plate and diffuser sheet is used, but both of them can be used in a stacked form.

Liquid crystal display panel (not shown) is disposed on the light output side of the diffuser means 14.

The optical element 15 is disposed between the light sources 12, 12, ... and the diffuser means 14. The optical element 15 is, for example, a prism sheet or lenticular lens sheet having light transmission properties, and has a configuration in which a luminance distribution-forming layer 18 is integrally formed at a light output side of a substrate 17.

The substrate 17 is formed of a plate material made of a transparent synthetic resin, such as an acrylic resin, polyethylene terephthalate, polyethylene naphthalate, polycarbonate, a styrene resin, or a styrene-methyl methacrylate copolymer resin. The substrate 17 can be made in the form of a sheet or film, but it is preferred that the substrate is made of a plate material having high rigidity because the plate material disposed in the housing 11 is unlikely to suffer deflection, warpage, thermal deformation, and the like and a distance from the light sources 12 in the Z direction is unlikely to change. With respect to the thickness of the substrate 17, there is no particular limitation, and the thickness of the substrate may be as small as the thickness of a sheet or film as long as predetermined rigidity can be secured.

The luminance distribution-forming layer 18 has a function of suppressing luminance variations of the light from the light sources 12. The luminance distribution-forming layer 18 is constituted of a plurality of structure portions 18a, 18a, ... each having an edge extending in the Y direction shown in FIG. 1, and the structure portions 18a, 18a, ... are continuously provided in the X direction at a predetermined pitch. The structure portions 18a protrude in the Z direction shown in FIG. 1, namely, in the optical axis direction of the light from the light sources 12, and each of the structure portions has an outer surface having, for example, a curved shape or a shape of polygon. When each of the structure portions 18a has a curved shape, the curved shape is, for example, a non-spherical shape.

The array pitch of the structure portions 18a, 18a, ... is not relevant to the array pitch of the light sources 12, 12, ... , and the structure portions 18a, 18a, ... are arrayed at a very small pitch.

The optical element 15 may have a configuration in which the luminance distribution-forming layer 18 is integrally molded on the substrate 17, but also has configurations in which the luminance distribution-forming layer 18 made of an ultraviolet curing resin is transferred to the substrate 17, or in which the luminance distribution-forming layer 18 is bonded on the substrate 17 by press molding.

The optical element group 16 is constituted of a single or a plurality of various optical elements, such as a diffuser sheet, a prism sheet, or a reflective polarizer. When the optical element group 16 is constituted of a plurality of optical elements, the plurality of optical elements are arranged in a stacked manner. The optical element group 16 is disposed opposite to the optical element 15 by sandwiching the diffuser means 14.

In the surface emitting device 10 having the above-described configuration, a space between the reflection plate 13 and the optical element 15 is formed as an air layer 19.

In the surface emitting device 10, the light emitted from the light sources 12, 12, ... successively pass through the optical element 15, diffuser means 14, and optical element group 16 and irradiates the liquid crystal display panel. In this instance, part of the emitted light are reflected on the reflective surface 13a of the reflection plate 13 and directed toward the optical element 15.

The light incident on the optical element 15 is refracted at the incident plane of the optical element 15, and further refracted and directed toward the diffuser means 14 when emitted from the optical element 15. The light incident on the diffuser means 14 is diffused and emitted, and reaches the liquid crystal display panel through the optical element group 16.

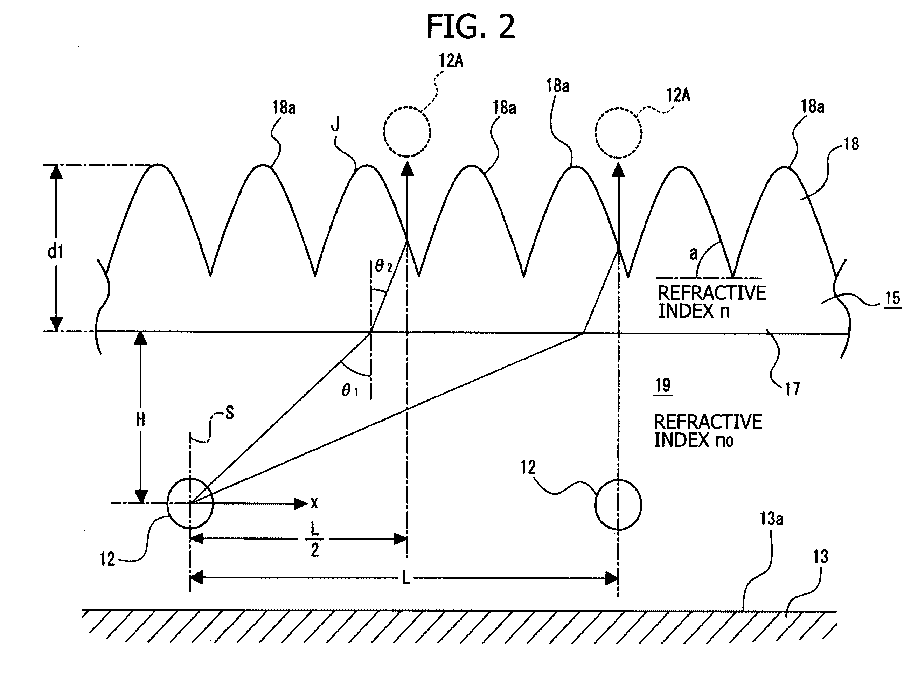

FIG. 2 shows the passage of light emitted from the light sources 12, 12, ... and the positional relation of the individual parts.

In FIG. 2, character L denotes a distance between the centers of the light sources 12, 12 adjacent to each other (light sources distance), character n denotes a refractive index of the optical element 15, d1 denotes a thickness of the optical element 15, character H denotes a distance from the center of the light source 12 to the optical element 15 in the direction of the optical axis S (optical-axial distance), n0 denotes a refractive index of air in the air layer 19, $\theta1$ denotes an angle of incidence with respect to optical axis S of light which is emitted from the light source 12 and incident on the optical element 15, and $\theta2$ denotes an angle of refraction of the light incident on the optical element 15.

In FIG. 2, the structure portions 18a, 18a, ... of the luminance distribution-forming layer 18 with respect to the substrate 17 of the optical element 15 are shown by exaggerating their sizes, but, actually, the structure portions 18a, 18a, ... are extremely small with respect to the substrate 17.

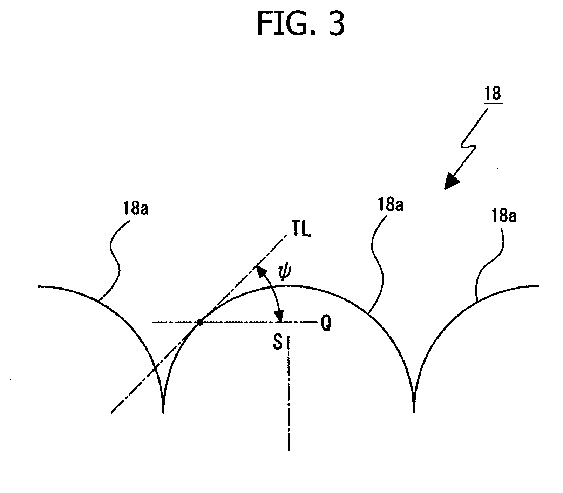

As shown in FIG. 3, symbol $\psi$ denotes a tangent line angle formed between a tangent line TL tangent to the outer surface of a the structure portion 18a and a plane C perpendicular to the optical axis S, in cross-section at direction lined with the structure portions 18a, 18a, ... in the luminance distribution-forming layer 18. In this case, as shown in FIG. 2, character a denotes the maximum tangent line angle out of the tangent line angle $\psi$, and character x denotes a moving distance of a divided image 12A of the light source 12 in the direction perpendicular to the optical axis S from the light source 12. The maximum tangent line angle a typically tends to be the base angle of the structure portion 18a.

By using the factors (parameters), the surface emitting device 10 satisfies the following formulae (1) to (3).

$$n0 \cdot \sin\psi = n \cdot \sin(\psi - \theta2) \qquad\qquad (1)$$

$$n0 \cdot \sin\theta1 = n \cdot \sin\theta2 \qquad (2)$$

$$x = H \cdot \tan\theta1 + d1 \cdot \tan\theta2 \qquad (3)$$

Using the formulae (1) to (3), an arbitrary tangent line angle $\psi$ is applied to the formula (1) to calculate a refraction angle $\theta2$, the calculated refraction angle $\theta2$ is applied to the formula (2) to calculate an incident angle $\theta1$, and the calculated incident angle $\theta1$ and refraction angle $\theta2$, an optical-axial distance H, and a thickness d1 of the optical element are applied to the formula (3) to calculate a moving distance x. Accordingly, the moving distance x corresponding to the tangent line angle $\psi$ is primarily determined, and the divided image 12A of a light which reaches a contact point of the luminance distribution-forming layer 18 having the tangent line angle $\psi$ moves in the direction of the adjacent light source 12 by distance corresponding to x.

Thus the moving distance x of the divided images 12A is primarily determined according to the tangent line angle $\psi$.

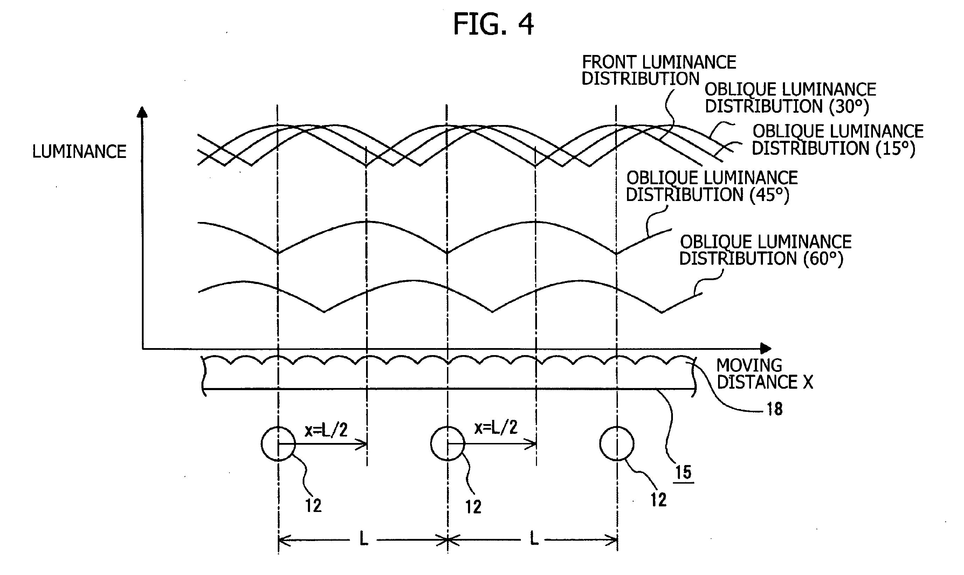

FIG. 4 is a graph showing the luminance distribution of light from the light sources 12, 12, ..., which pass through the optical element 15 before passing the diffuser means 14.

As shown in FIG. 4, the front luminance is maximum at positions immediately above the light sources 12, 12, ..., and minimum in the centers of the individual spaces between the light sources 12, 12 adjacent to each other, namely, under x = L/2. On the other hand, luminance distributions as viewed from an oblique angle (45°) are maximum in the centers of the individual spaces between the light sources 12, 12, and minimum in positions immediately above the light sources 12, 12, .... In the oblique luminance distribution (45°), at around L/H = 2, it is likely that the oblique luminance is maximum in the centers of the individual spaces between the light sources 12, 12.

In FIG. 4, the luminance distributions as viewed at an angle of 15°, 30°, or 60° are also shown, and, in these oblique luminance distributions, the oblique luminance is maximum in predetermined positions between the light sources 12, 12 .

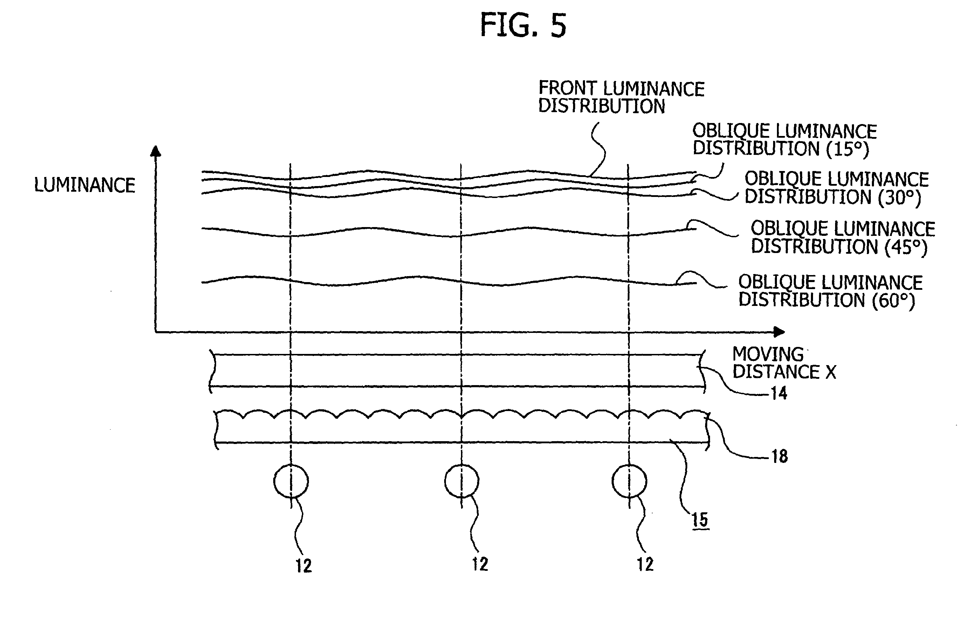

FIG. 5 is a graph showing the luminance distribution of the light which passed through the diffuser means 14. The diffuser means 14 has a function to average the angle distribution of the irradiation light fluxes, and hence the front luminance distribution is offset by the oblique luminance distribution, so that both the front luminance distribution and the oblique luminance distribution are uniformed. Therefore, the luminance distribution when the liquid crystal display panel is viewed from the all angles becomes almost constant, irrespective of the moving distance x, and the uniformity of luminance distribution is secured.

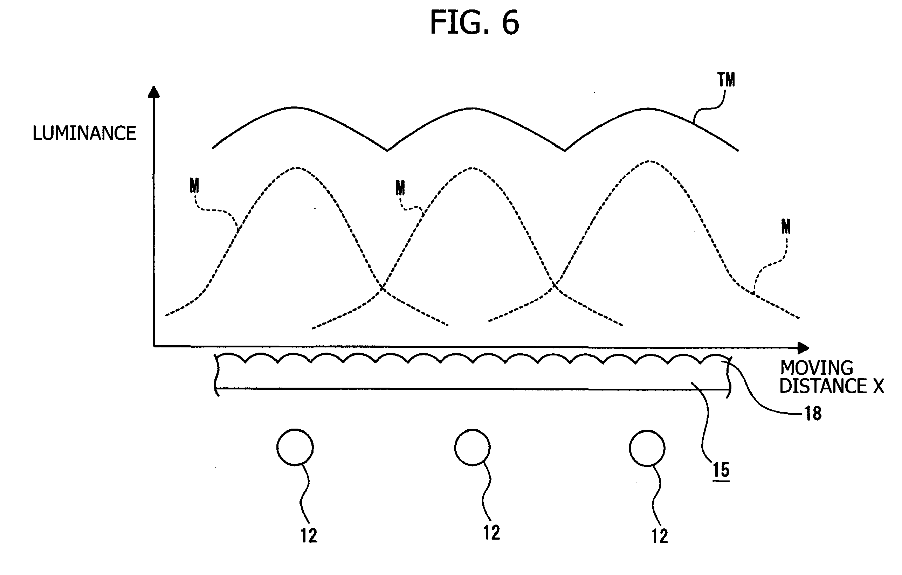

In the surface emitting device 10, as shown in FIG. 6, front luminance distributions M, M, ... of light emitted from the individual light sources 12, 12, ... have a shape of substantial triangle with vertex on top such that the luminance level lowers toward positions immediately above the light sources 12, 12 adjacent to each other. With respect to the two light sources 12, 12, a part of the individual front luminance distributions M, M overlap each other at a position between the two light sources 12, 12 adjacent to each other, and the total sum of a luminance level of a light from one light source 12 and a luminance level of a light from another light source 12 constitutes a total front luminance distribution TM. A part of the individual front luminance distributions M, M overlap each other between the two light sources 12, 12 adjacent to each other to raise the luminance level to the level at a position immediately above the light source 12, thus improving unevenness of the front luminance distribution TM.

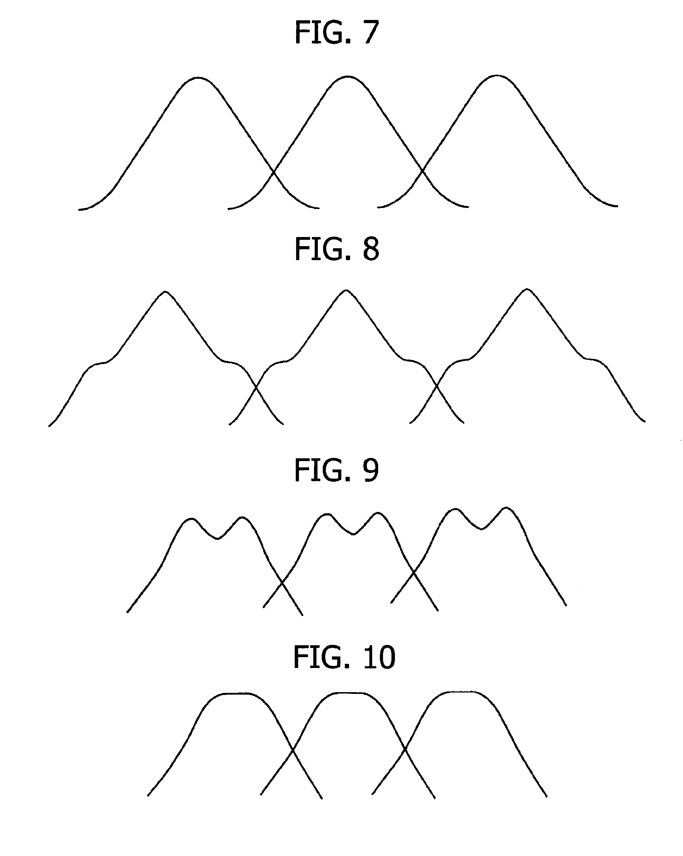

With respect to the front luminance distribution of light from the light sources 12, the shape is not limited to the triangle, and the shape may be, for example, a shape of substantial triangle having a rounded top (see FIG. 7), a shape having a step portion in its slope (see FIG. 8), and the like. When a ratio of the light sources distance L to the optical-axial distance H (L/H) is large, the shape of the front luminance distribution may be a shape in which the luminance level has minimum values at positions immediately above the light sources 12 as shown in FIG. 9, or a shape in which the luminance level is substantially constant around positions immediately above the light sources 12 as shown in FIG. 10.

In the surface emitting device 10, as described above, the front luminance at the centers of the spaces between the light sources 12, 12 adjacent to each other, namely, in positions of x = L/2, are minimum. Based on assumption that $\phi$ represents front luminance, a minimum value $\phi_0$ of the front luminance $\phi$ satisfies the formula below in respect of the maximum value $\phi_{max}$ of the front luminance $\phi$.

$$0.65\phi_{max} \leqq \phi_0 \leqq 0.85\phi_{max} \qquad\qquad (4)$$

At x = L/2, the front luminance $\phi$ takes a minimum value $\phi_0$, and the minimum value $\phi_0$ satisfies the formula (4) above, so that, when L/H is in the range of from 1.8 to 2.3, uniformity of the luminance distribution when the liquid crystal display panel is viewed from all angles is secured.

For satisfying the formula (4) above, it is desirable that the structure portions 18a, 18a, ... in the luminance distribution-forming layer 18 of the optical element 15 is formed in a shape which satisfies the following formula when L/H is in the range of from 1.8 to 2.3.

$$35° + 5°\cdot L/H \leqq a \leqq 50° + 5°\cdot L/H \qquad\qquad (5)$$

When the maximum tangent line angle a of the structure portions 18a satisfies the formula (5) above, the width of the bottom part of the luminance distribution of a light from the single light source 12 can be controlled.

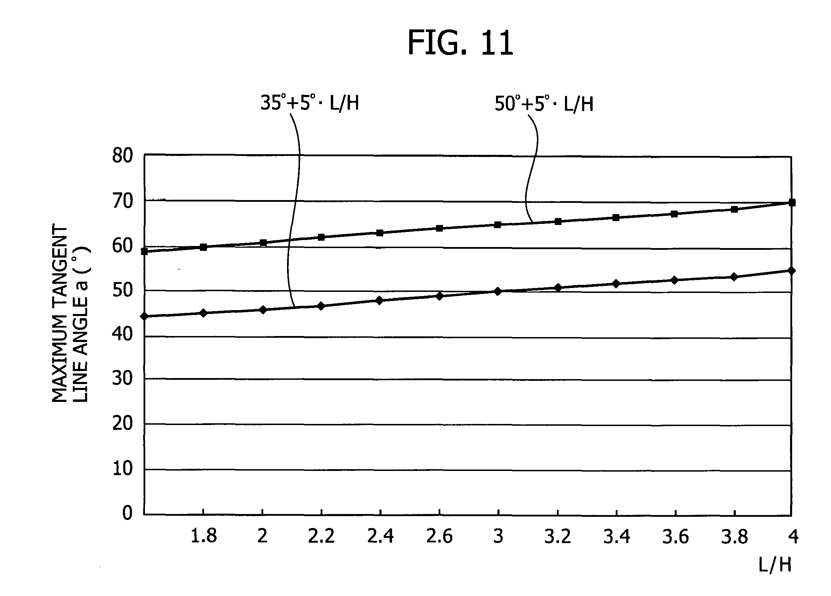

FIG. 11 is a graph showing the formula (5) above. In FIG. 11, the upper line segment indicates the upper limit of the formula (5), i.e., a = 50° + 5°•L/H, and the lower line segment indicates the lower limit of the formula (5), i.e., a = 35° + 5°•L/H. The maximum tangent line angle a is included between the upper limit and the lower limit, and thus the front luminance $\phi$ under x = L/2 takes a minimum value $\phi_0$.

For satisfying the formulae (4) and (5), it is necessary that the structure portions 18a have a shape such that the maximum tangent line angle a becomes a predetermined angle, but, when the thickness d1 of the optical element 15 and the optical-axial distance H are determined, the tangent line angle $\psi$ of the structure portions 18a becomes a function of only the moving distance x based on the above formulae (1) to (3).

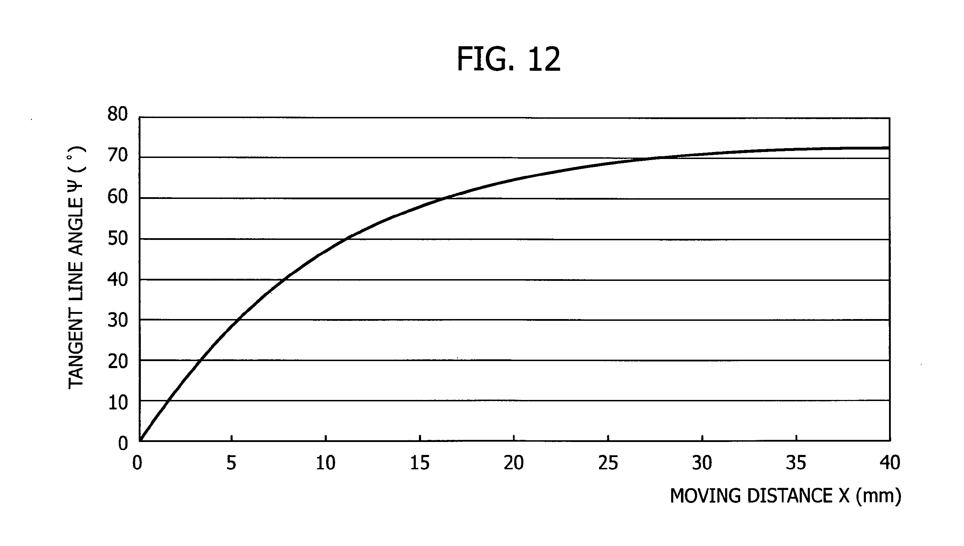

FIG. 12 is a graph showing the relation between the tangent line angle $\psi$ and the moving distance x based on the formulae (1) to (3), when, for example, the optical-axial distance H = 15.0 mm, the thickness d1 of the optical element = 1.0 mm, the refractive index n of the optical element = 1.59, and the refractive index n0 of air = 1.0.

The optical-axial distance H and the thickness d1 of the optical element are given and a relationship between the tangent line angle $\psi$ and the moving distance x is derived from the formulae (1) to (3), and the light sources distance L is given and the structure portions 18a, 18a, ... are formed in the shape which satisfies the formulae (4) and (5), and thus the luminance distribution of light is controlled by the tangent line angle $\psi$, so that the luminance distribution is surely even.

When a specific tangent line angle $\psi$ occupies the majority in the structure portions 18a, a large amount of light are refracted in a moving distance x corresponding to the tangent line angle $\psi$. For example, when the structure portions 18a are formed in a shape of substantial triangle having a vertical angle of 90°, a tangent line angle $\psi$ = 45° occupies the majority, and a large amount of light are refracted in a moving distance x corresponding to the tangent line angle $\psi$ = 45°, and only the luminance level in that portion becomes high. Therefore, when a specific tangent line angle $\psi$ occupies the majority in the structure portions 18a, there is a possibility that the front luminance $\phi$ becomes maximum in x = L/2 or a portion around it.

In the surface emitting device 10, in order to prevent the front luminance $\phi$ from becoming maximum under x = L/2 or a portion around it, it is arranged that the ratio P of a portion having a tangent line angle $\psi$ in which ratio of array direction component of a cross-section of the structure portion of outer surface portion of cross-section of the structure portion at a direction lined with the structure portion 18a, 18a, ... becomes 40° or above and "a" or less, satisfies the formula (6) below.

Specifically, when array direction component of cross section of structure portion of the whole of the outer surfaces J of the cross-sections of the structure portions in a direction lined with the structure portions 18a, 18a, ... (see FIG. 2), is taken as 1, the ratio P is the ratio of a portion having a tangent line angle $\psi$ in which ration of array direction component of cross section of structure portion is 40° or above and "a" or less.

$$0.15 \leqq P \leqq 0.45 \qquad\qquad (6)$$

As mentioned above, character a represents the maximum tangent line angle in the structure portions.

When the ratio P falls in the constant range shown in the formula (6), no maximum value of the front luminance $\phi$ is present in x = L/2 or a portion around it.

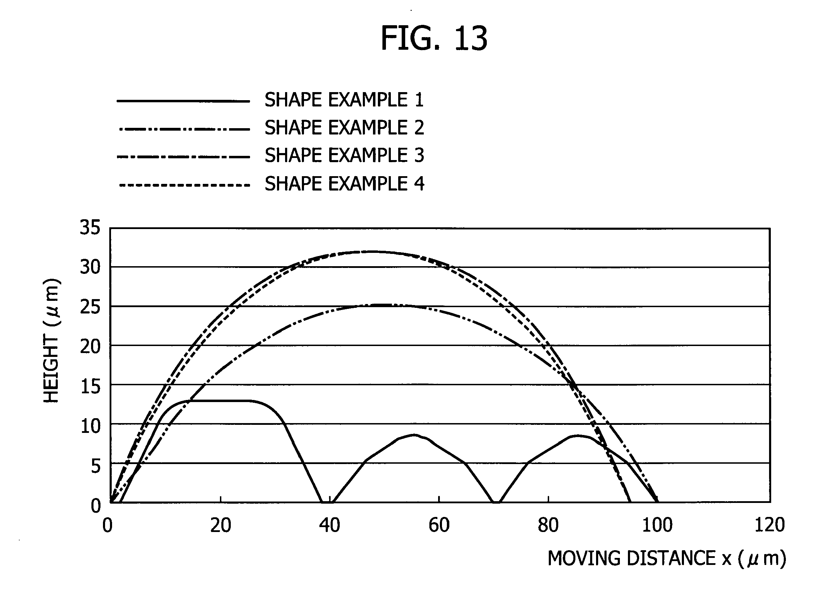

FIG. 13 is a diagram showing examples of cross-sections of the structure portions in the luminance distribution-forming layer (shape examples 1 to 4), in which the luminance distribution as viewed from any angle is substantially constant, irrespective of the moving distance x. FIG. 13 shows examples in which L/H = 2.0 and a diffuser means (diffusion plate) having a total light transmittance rate of 60% is used.

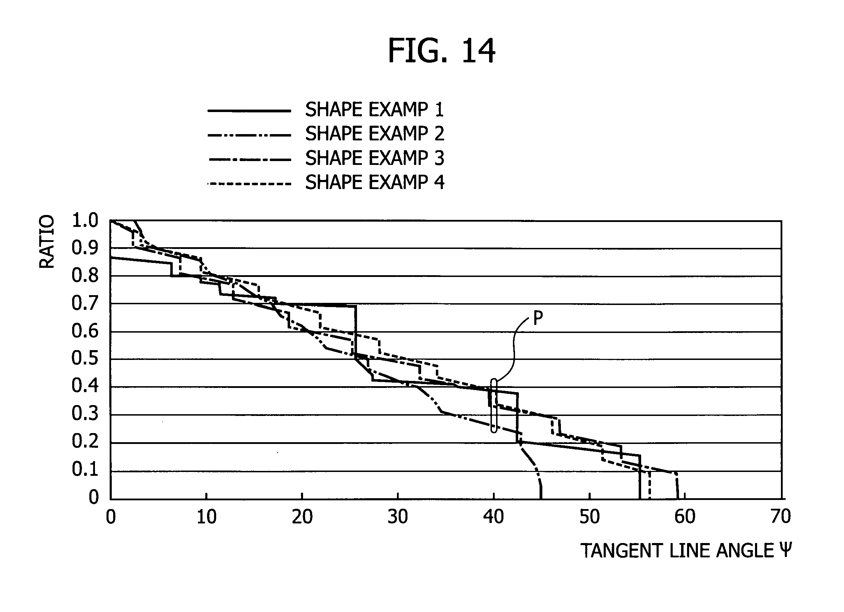

FIG. 14 is a graph showing the relationship between a tangent line angle $\psi$ and a ratio of tangent line angles equal to or larger than the tangent line angle $\psi$ with respect to the shape examples shown in FIG. 13. For example, an observation is made on the structure portions in the shape example 1. In this shape example, the ratio of tangent line angles $\psi$ of about 35° or larger to the tangent line angles in the total structure portions is about 40%. The intersection of the data of each of the shape examples 1 to 4 and the X axis indicates the maximum tangent line angle a.

L/H = 2.0 is applied to the formula (5) above to calculate the maximum tangent line angle a. As a result, the calculated maximum tangent line angle a is in the range of 45° to 60°. Therefore, in each of the shape examples 1 to 4 shown in FIG. 14, the maximum tangent line angle a falls in the range of 45° to 60° and hence satisfies the formula (5) above.

With respect to each of the shape examples 1 to 4, the ratio P of a tangent line angle $\psi$ in the range of 40° to a to the total distribution of the tangent line angle $\psi$ is determined. In each of the shape examples 1 to 4, the ratio P falls in the range of from 0.25 to 0.38, and hence satisfies the formula (6) above.

Further, in each of the shape examples 1 to 4, the minimum value $\phi_0$ falls in the range of from $0.65\phi_{max}$ to $0.85\phi_{max}$ and satisfies the formula (4) above.

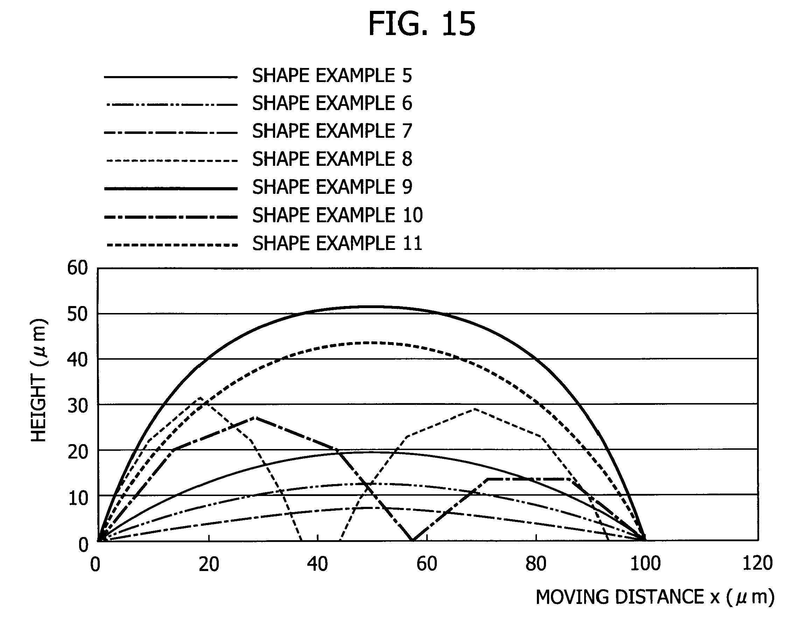

On the other hand, FIG. 15 is a diagram showing examples of cross-sections of the structure portions in the luminance distribution-forming layer (shape examples 5 to 11), in which the luminance distribution as viewed from any angle is not substantially constant. As similar with the examples shown in FIG. 13, FIG. 15 shows examples in which L/H = 2.0 and a diffuser means (diffusion plate) having a total light transmittance of 60% is used.

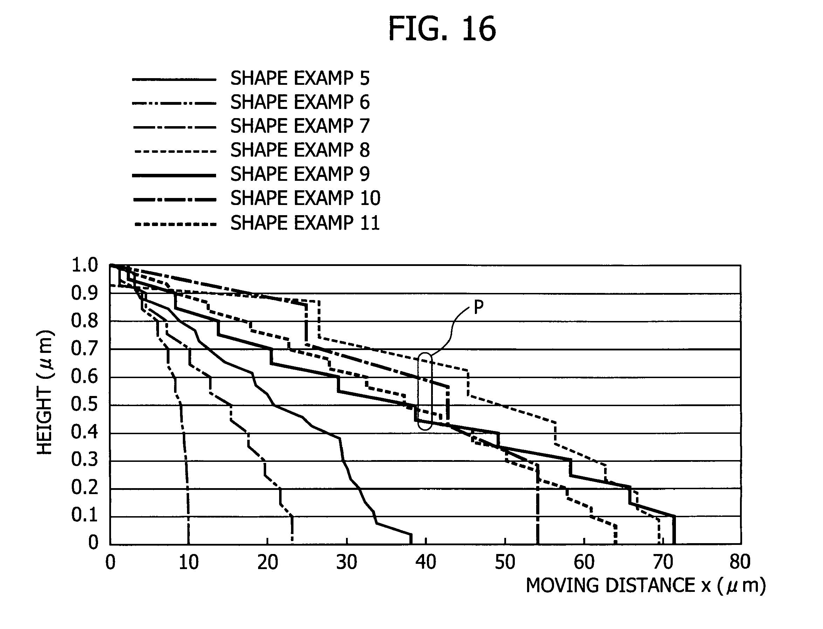

As similar with FIG. 14, FIG. 16 a graph showing the relationship between a tangent line angle $\psi$ and a ratio of tangent line angles equal to or larger than the tangent line angle $\psi$ with respect to the shape examples shown in FIG. 15. The intersection of the data of each of the shape examples 5 to 11 and the X axis indicates the maximum tangent line angle a.

L/H = 2.0 is applied to the formula (5) above to calculate the maximum tangent line angle a. As a result, the calculated maximum tangent line angle a is in the range of 45° to 60°. Therefore, in each of the shape examples shown in FIG. 16, excluding the shape example 10 (shape examples 5 to 9 and 11), the maximum tangent line angle a is not in the range of 45 to 60°, and the formula (5) above is not satisfied.

With respect to each of the shape examples 5 to 11, the ratio P of a tangent line angle $\psi$ in the range of 40° to a out of the total distribution of the tangent line angle $\psi$ is determined. In each of the shape examples 5, 6, 7, 8, 10, and 11 other than the shape example 9, the ratio P is 0 or in the range of more than 0.45, and hence does not satisfy the formula (6) above.

Further, in each of the shape examples 5 to 11, the minimum value $\phi_0$ of the front luminance $\phi$ in positions of x = L/2 is smaller than $0.65\phi_{max}$, the front luminance $\phi$ has no minimum value $\phi_0$ at positions of x = L/2, or the minimum value $\phi_0$ is larger than $0.85\phi_{max}$. Therefore, in each of the shape examples 5 to 11, the formula (4) above is not satisfied.

The above results have confirmed that the luminance distribution as viewed from any angle is substantially constant in the examples in which the formulae (4), (5), and (6) above are satisfied (shape examples 1 to 4).

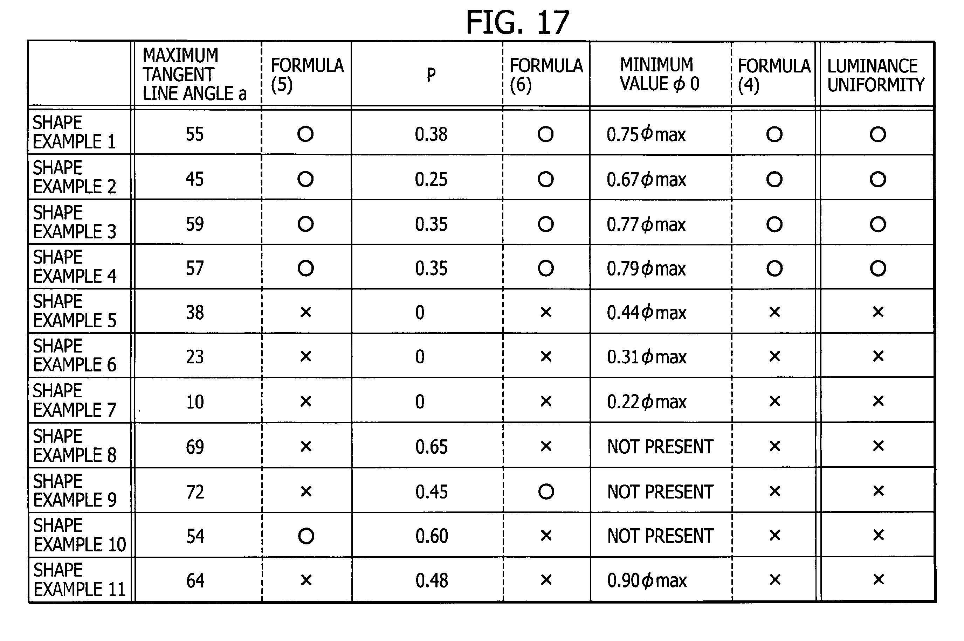

FIG. 17 is a table listing data for the shape examples 1 to 11 shown in FIGs. 13 to 16.

In the surface emitting device 10, as mentioned above, when L/H is in the range of from 1.8 to 2.3, it is desirable that the formula (5) above is satisfied, but, when L/H is in the range of from 2.8 to 4.2, it is desirable that the following formula (5)' is satisfied.

$$35° + 5°•L/H \leqq a \leqq (\text{Smaller angle selected from } 50° + 5°•L/H \text{ and } 65°) \qquad (5)'$$

When the maximum tangent line angle a of the structure portions 18a satisfies the formula (5)' above, the width of the bottom part of the luminance distribution of a light emitted from the single light source 12 can be controlled.

The case where L/H is in the small range of from 1.8 to 2.3 is described above, but, when L/H is in a large range, the optical-axial distance H between the light sources and the optical element becomes small or the light sources distance L between the light sources adjacent to each other becomes large, and it is likely that the luminance under x = 0 (in positions immediately above the light sources) tends to be larger than the luminance under x = L/2. Therefore, when L/H is in the range of large values, it is desirable that the front luminance distribution $\phi$ has a shape shown in FIG. 9 and takes a minimum value $\phi_1$ in positions immediately above the light sources (x = 0) and the ratio P of a tangent line angle $\psi$ in the range from 40° to a to the total distribution of the tangent line angle $\psi$ of the structure portions 18a is large.

The light incident perpendicularly on the lower surface of the optical element (surface facing the light sources) from the light sources is internally reflected at the luminance distribution-forming layer, but, when the maximum tangent line angle a becomes large, the above reflection angle becomes small, and the light outputted from the luminance distribution-forming layer is likely to be incident on the diffuser means without being incident on the adjacent luminance distribution-forming layer. When the light is incident on the diffuser means, the diffuser means averages the angles, whereby the amount of light under x = 0 is increased. Therefore, even if a minimum value $\phi_1$ is taken under x = 0, the luminance under x = 0 becomes too large, and the luminance distribution as viewed from any angle is unlikely to become substantially constant. Accordingly, when L/H is in the enlarged range of i.e., 2.8 to 4.2, the upper limit of the maximum tangent line angle a in the formula (5)' is set to be 65°, in order to avoid high angle.

When the ratio P is large, the tangent line angles $\psi$ of the structure portions 18a tends to be large, and the luminance of the divided images at positions near to x = L/2 is increased, so that the luminance of the divided images in positions immediately above the light sources is reduced. For example, when L/H is in the range of from 2.8 to less than 3.5, it is assumed that the ratio P satisfies the following formula:

$$0.55 \leqq P \leqq 0.70 \qquad (6)'.$$

When L/H is in the range of from 3.5 to 4.2, it is assumed that the ratio P satisfies the following formula:

$$0.60 \leqq P \leqq 0.75 \qquad (6)''.$$

However, when values of the ratio P become too large, the minimum value $\phi_1$ of the front luminance distribution $\phi$ at positions immediately above the light sources becomes too small, and there is a possibility that luminance of the light which has passed through the diffuser means is lowered at positions immediately above the light sources. Therefore, in order to prevent the luminance of the light which has passed through the diffuser means from becoming too small at positions immediately above the light sources, it is necessary that the minimum value $\phi_1$ of the front luminance distribution under x = 0 is larger than the minimum value $\phi_0$ of the front luminance distribution under x = L/2.

$$\phi_0 < \phi_1 \qquad (7)$$

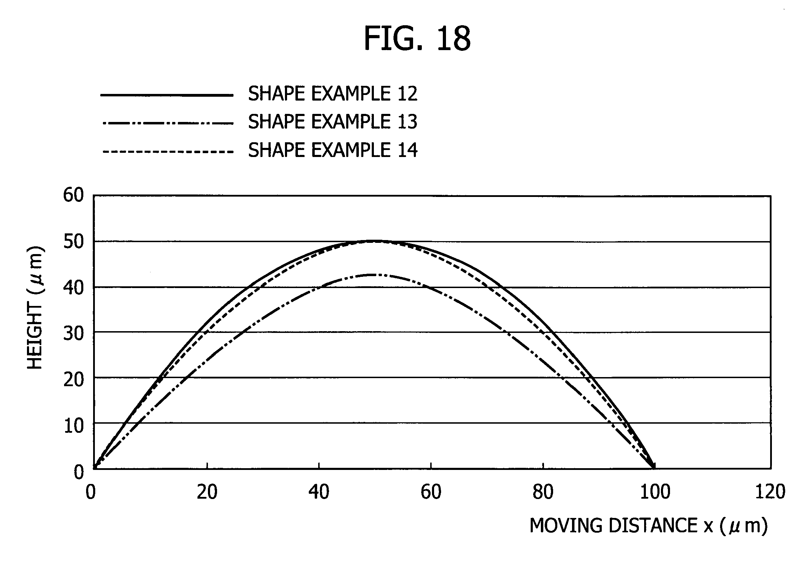

FIG. 18 is a diagram showing examples of cross-sections of the structure portions in the luminance distribution-forming layer (shape examples 12 to 14), in which, when L/H = 3.0 which is an example of L/H in the range of 2.8 to less than 3.5, the luminance distribution as viewed from any angle is substantially constant, irrespective of the moving distance x. FIG. 18 shows examples in which a diffuser means (diffusion plate) having a total light transmittance of 60% is used.

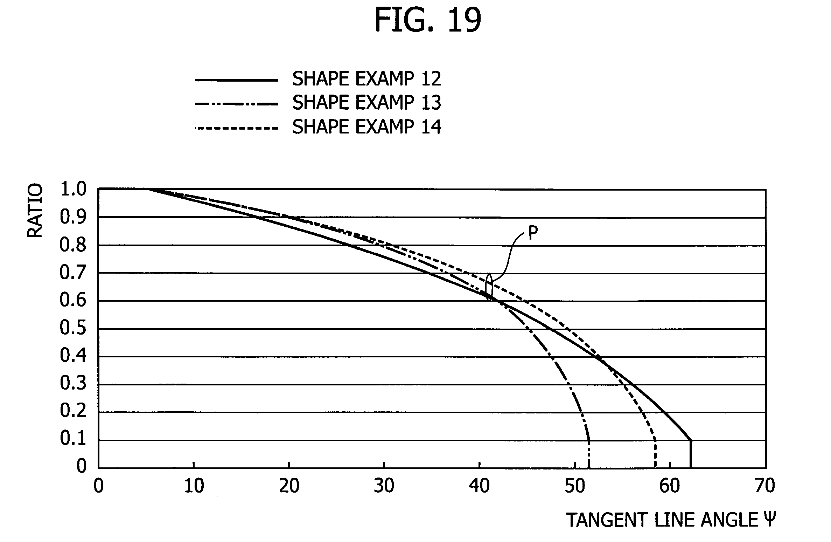

As similar with FIG. 13, FIG. 19 is a graph showing the relationship between a tangent line angle $\psi$ and a ratio of tangent line angles equal to or larger than the tangent line angle $\psi$ with respect to the shape examples shown in FIG. 18.

L/H = 3.0 is applied to the formula (5)' above to calculate the maximum tangent line angle a. As a result, the maximum tangent line angle a is in a range from 50° to 65°. Therefore, in each of the shape examples 12 to 14 shown in FIG. 19, the maximum tangent line angle a falls in the range from 50° to 65° and hence satisfies the formula (5)' above.

With respect to each of the shape examples 12 to 14, the ratio P of a tangent line angle $\psi$ of 40° to a out of the total distribution of the tangent line angle $\psi$ is determined. In each of the shape examples 12 to 14, the ratio P falls in the range from 0.62 to 0.68, and hence the formula (6)' above is satisfied.

Further, with respect to each of the shape examples 12 to 14, the minimum value $\phi_0$ of the front luminance $\phi$ in positions of x = L/2 falls in the range from $0.65\phi_{max}$ to $0.85\phi_{max}$, and the formula (4) above is satisfied.

In addition, with respect to each of the shape examples 12 to 14, $\phi_0 < \phi_1$, that is, the formula (7) above is satisfied.

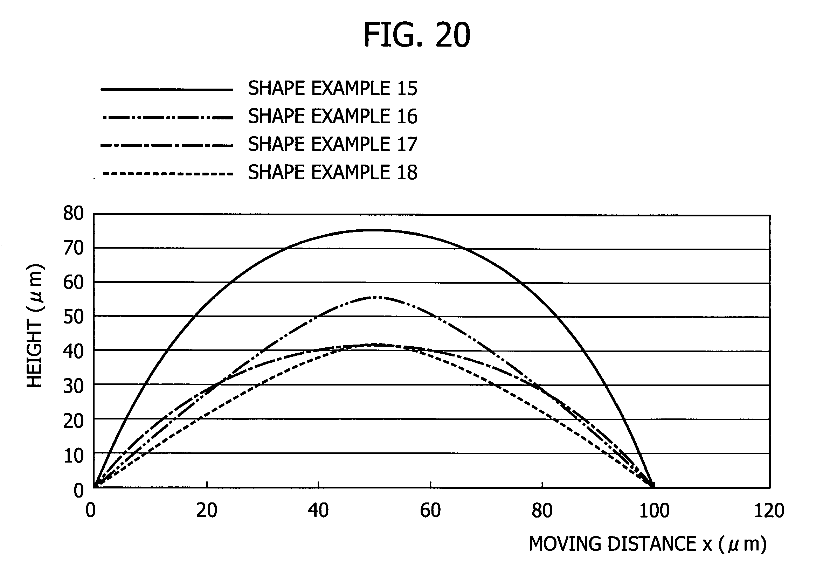

On the other hand, FIG. 20 is a diagram showing examples of cross-sections of the structure portions in the luminance distribution-forming layer (shape examples 15 to 18), in which, the luminance distribution as viewed from any angle does not become substantially constant when L/H = 3.0, that is an example of L/H in the range from 2.8 to less than 3.5. FIG. 20 shows examples in which a diffuser means (diffusion plate) having a total light transmittance of 60% is used.

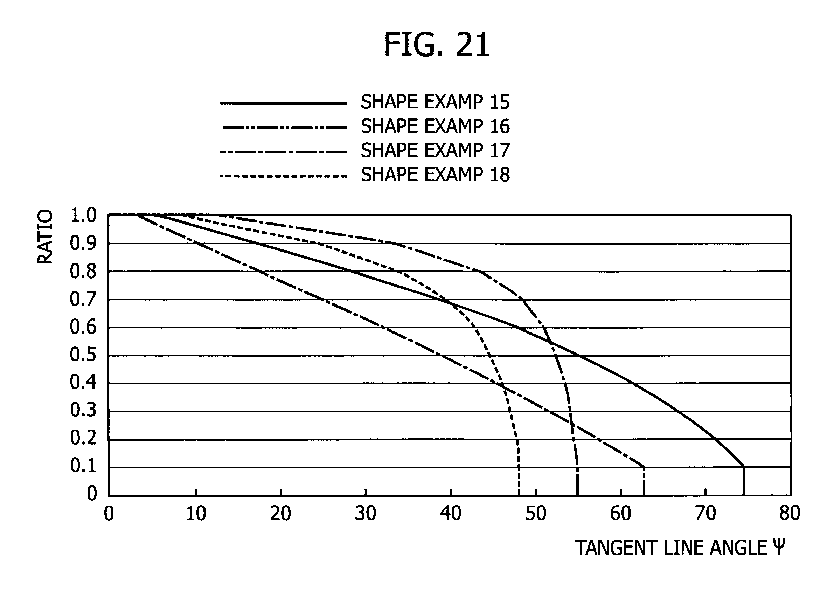

As similar with FIG. 14, FIG. 21 is a graph showing the relationship between a tangent line angle $\psi$ and a ratio of tangent line angles equal to or larger than the tangent line angle $\psi$ with respect to the shape examples shown in FIG. 20.

L/H = 3.0 is applied to the formula (5)' above to calculate the maximum tangent line angle a. As a result, the maximum tangent line angle a is in the range from 50° to 65°. Therefore, in each of the shape examples 16 and 17 shown in FIG. 21, the maximum tangent line angle a falls in the range of 50° to 65° and hence the formula (5)' above is satisfied, but, in each of the shape examples 15 and 18, the maximum tangent line angle a is less than 50° or more than 65°, and hence does not satisfy the formula (5)' above.

With respect to each of the shape examples 15 to 18, the ratio P of a tangent line angle $\psi$ of 40° to a out of the total distribution of the tangent line angle $\psi$ is determined. As a result, although the shape examples 15 and 18 satisfy the formula (6)' above, the shape examples 16 and 17 do not satisfy the formula (6)' above.

Further, in each of the shape examples 16 and 17, the formula (4) above is satisfied, but, in each of the shape examples 15 and 18, the minimum value $\phi_0$ is smaller than $0.65\phi_{max}$ or larger than $0.85\phi_{max}$, and the formula (4) above is not satisfied.

In addition, in the shape example 15, $\phi_0 < \phi_1$, that is, the formula (7) above is satisfied, but, in each of the shape examples 16 and 18, $\phi_0 > \phi_1$, that is, the formula (7) above is not satisfied. In the shape example 17, $\phi_1$ is not included, and hence the formula (7) above is not satisfied.

The above results have confirmed that the luminance distribution as viewed from any angle becomes substantially constant in each of the examples in which the formulae (4), (5)', (6)', and (7) above are satisfied (shape examples 12 to 14).

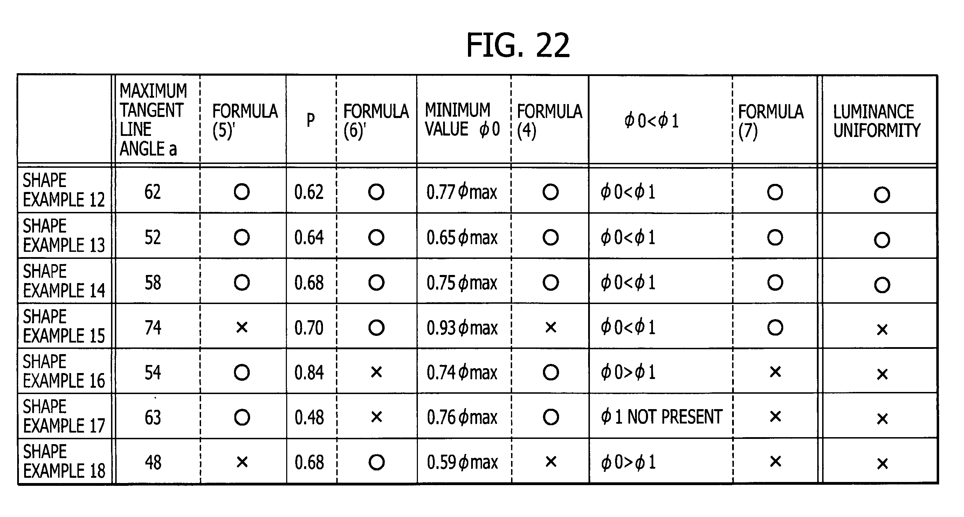

FIG. 22 is a table listing data of the shape examples 12 to 18 shown in FIGs. 18 to 21.

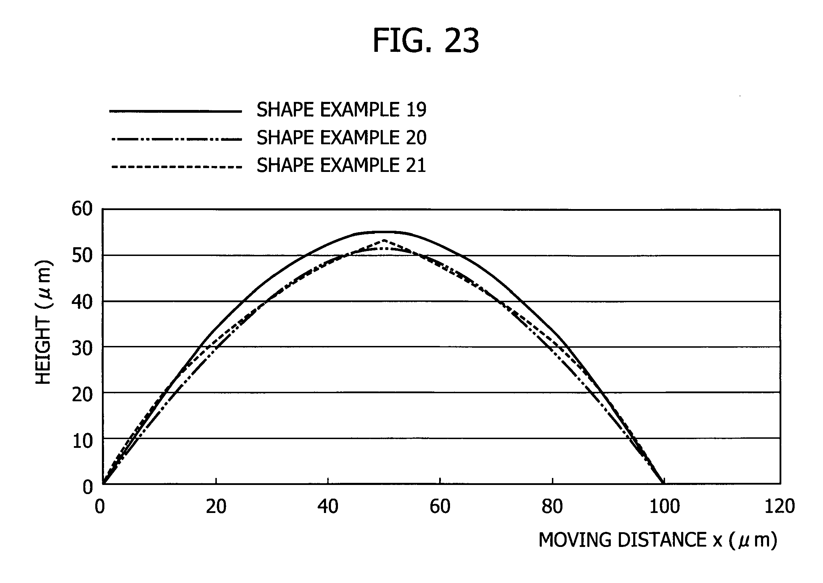

FIG. 23 is a diagram showing examples of cross-sections of the structure portions in the luminance distribution-forming layer (shape examples 19 to 21), in which, the luminance distribution as viewed from any angle becomes substantially constant, irrespective of the moving distance x when L/H = 4.0, that is an example of L/H in the range from 3.5 to 4.2. FIG. 23 shows examples in which a diffuser means (diffusion plate) having a total light transmittance of 60% is used.

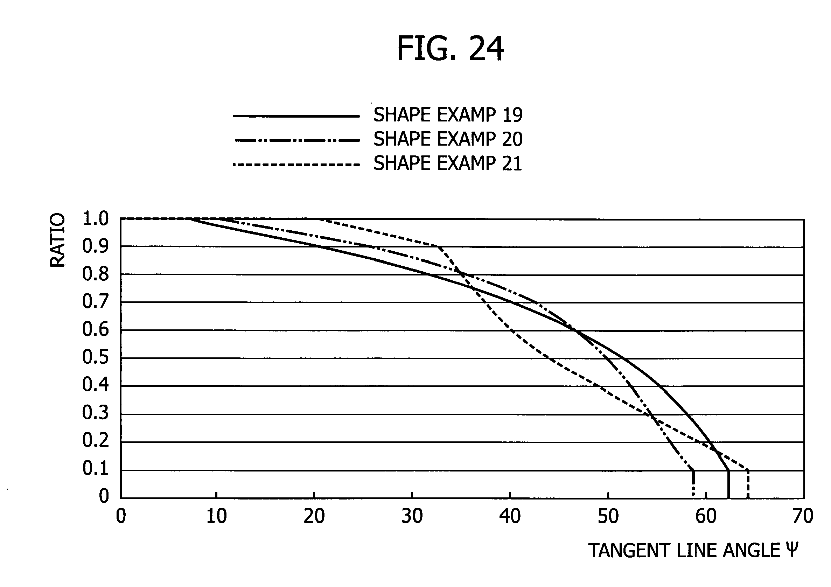

As similar with FIG. 13, FIG. 24 is a graph showing the relationship between a tangent line angle $\psi$ and a ratio of tangent line angles equal to or larger than the tangent line angle $\psi$ with respect to the shape examples shown in FIG. 23.

L/H = 4.0 is applied to the formula (5)' above to calculate the maximum tangent line angle a. As a result, the maximum tangent line angle a is 55° to 65°. Therefore, in each of the shape examples 19 to 21 shown in FIG. 19, the maximum tangent line angle a falls in the range from 55° to 65° and hence the formula (5)' above is satisfied.

With respect to each of the shape examples 19 to 21, the ratio P of a tangent line angle $\psi$ of 40° to a out of the total distribution of the tangent line angle $\psi$ is determined. In each of the shape examples 19 to 21, the ratio P falls in the range from 0.61 to 0.73, and hence the formula (6)" above is satisfied.

Further, in each of the shape examples 19 to 21, the minimum value $\phi_0$ of the front luminance $\phi$ in positions of x = L/2 falls in the range from $0.65\phi_{max}$ to $0.85\phi_{max}$, and the formula (4) above is satisfied.

In addition, in each of the shape examples 19 to 21, $\phi_0 < \phi_1$, that is, the formula (7) above is satisfied.

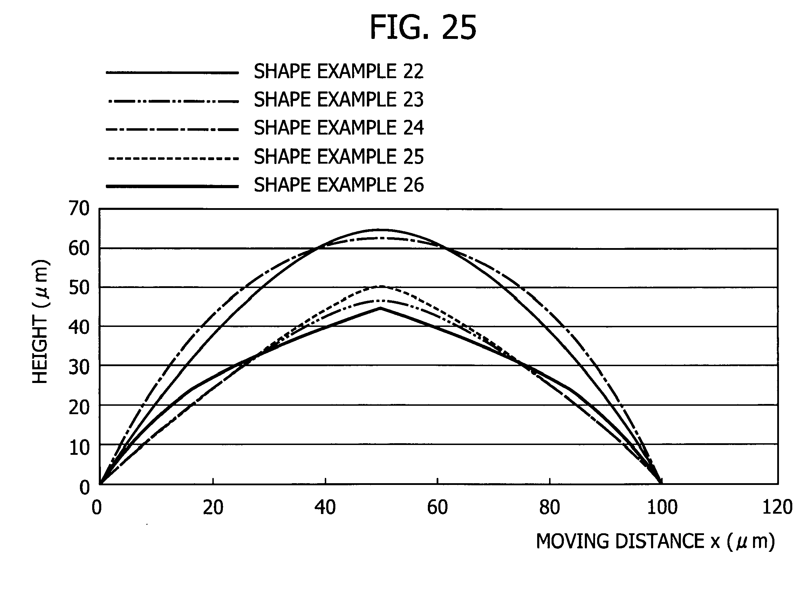

On the other hand, FIG. 25 is a diagram showing examples of cross-sections of the structure portions in the luminance distribution-forming layer (shape examples 22 to 26), in which, the luminance distribution as viewed from any angle does not become substantially constant when L/H = 4.0, that is an example of L/H in the range from 3.5 to 4.2. FIG. 25 shows examples in which a diffuser means (diffusion plate) having a total light transmittance of 60% is used.

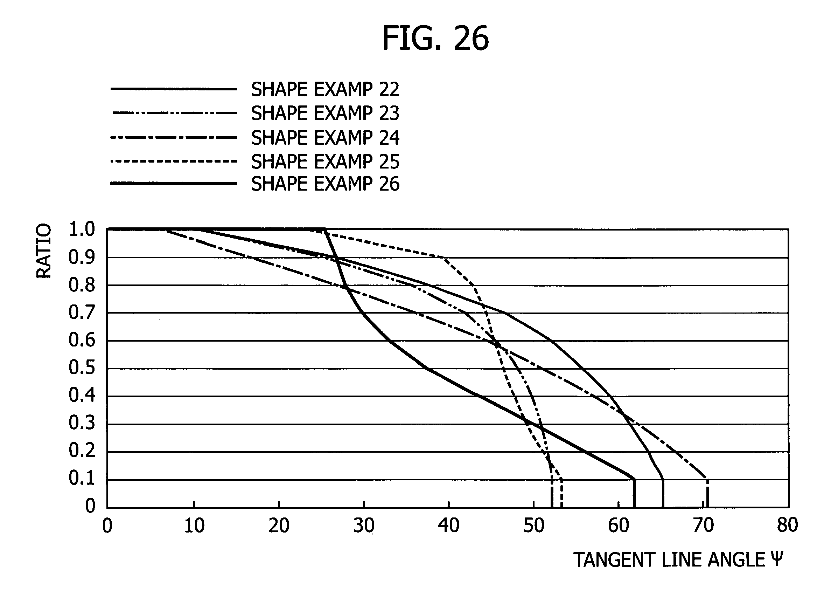

As similar with FIG. 14, FIG. 26 is a graph showing the relationship between a tangent line angle $\psi$ and a ratio of tangent line angles equal to or larger than the tangent line angle $\psi$ with respect to the shape examples shown in FIG. 25.

L/H = 4.0 is applied to the formula (5)' above to calculate the maximum tangent line angle a. As a result, the maximum tangent line angle a is in the range from 55° to 65°. Therefore, in each of the shape examples 22 and 26 shown in FIG. 26, the maximum tangent line angle a falls in the range from 55° to 65° and hence the formula (5)' above is satisfied, but, in each of the shape examples 23 to 25, the maximum tangent line angle a is less than 55° or more than 65°, and hence does not satisfy the formula (5)' above.

With respect to each of the shape examples 22 to 26, the ratio P of a tangent line angle $\psi$ of 40° to a out of the total distribution of the tangent line angle $\psi$ is determined. In each of the shape examples 23 and 24, the formula (6)" above is satisfied, but, in each of the shape examples 22, 25, and 26, the formula (6)" above is not satisfied.

Further, in the shape example 22, the formula (4) above is satisfied, but, in each of the shape examples 23 to 26, the minimum value $\phi_0$ is smaller than $0.65\phi_{max}$ or larger than $0.85\phi_{max}$, and hence the formula (4) above is not satisfied.

In addition, in each of the shape examples 23 to 26, $\phi_0 < \phi_1$, that is, the formula (7) above is satisfied, but, in the shape example 22, $\phi_0 > \phi_1$, that is, the formula (7) above is not satisfied.

The above results have confirmed that the luminance distribution as viewed from any angle becomes substantially constant in each of the examples in which the formulae (4), (5)', (6)", and (7) above are satisfied (shape examples 19 to 21).

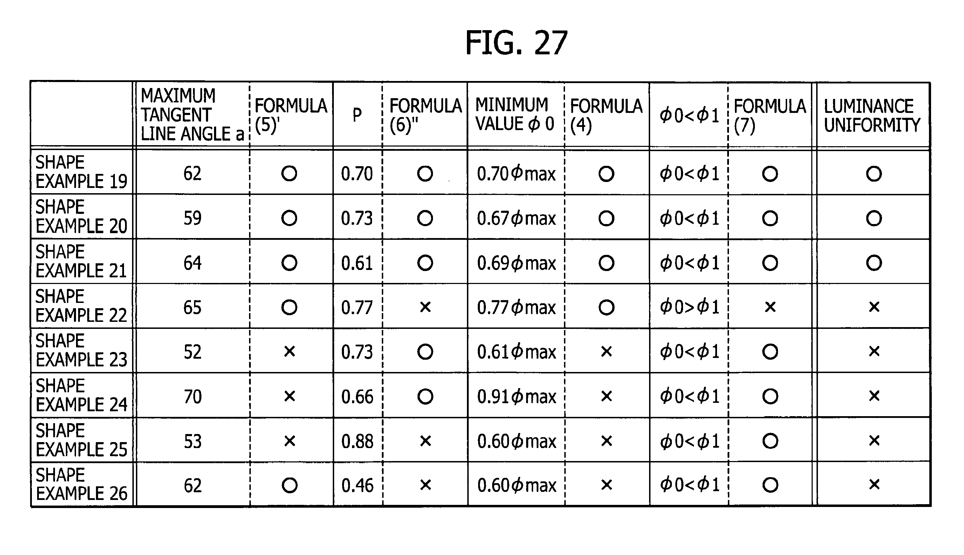

FIG. 27 is a table listing data for the shape examples 19 to 26 shown in FIGs. 23 to 26.

In the surface emitting device 10, the diffuser means 14 has a total light transmittance T of 0.55 to 0.85. The diffuser means 14 has a function to average the angle distribution of the irradiation light fluxes emitted from the light sources 12, 12, ... and from the optical element 15, but as the total light transmittance T becomes smaller, the above function of the diffuser means becomes more prominent. When the total light transmittance T is around 0.55, the averaging function is saturated (becomes substantially maximum), and, even if the total light transmittance T becomes smaller than 0.55, the averaging function does not change so largely, and hence the luminance loss is increased. As the total light transmittance T becomes smaller from around 0.85, the function of averaging the angle distribution becomes prominent. Therefore, when a total light transmittance T of the diffuser means 14 is in the range from 0.55 to 0.85, the function can sufficiently average the angle distribution of the diffuser means 14 while suppressing the luminance variations.

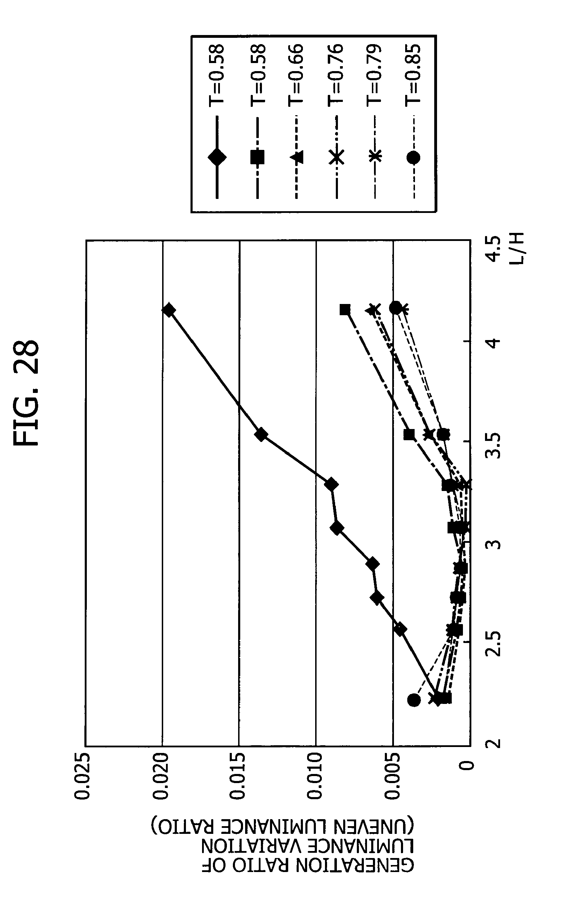

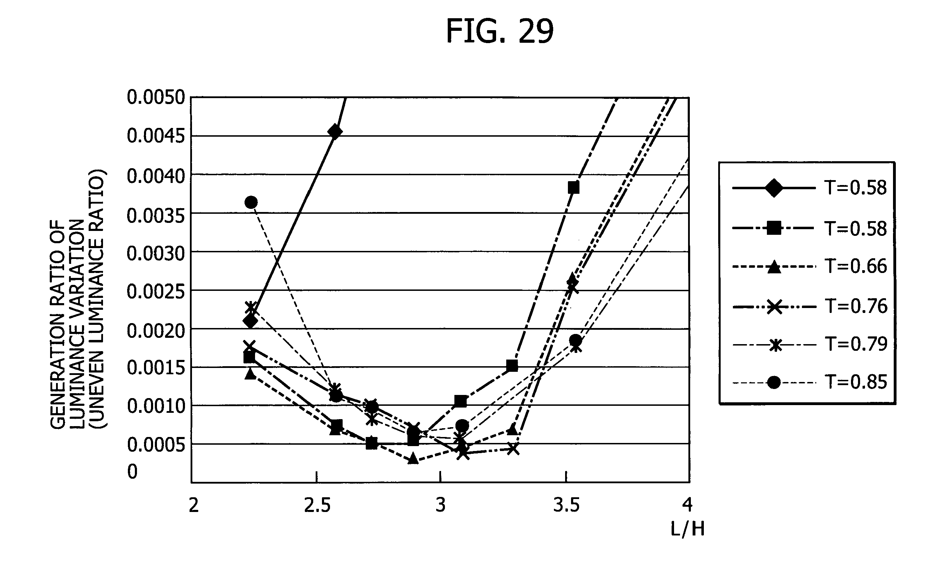

FIG. 28 is a graph showing the relationship between a luminance variation generation ratio (uneven luminance ratio) and L/H when using diffuser means having different total light transmittances T. FIG. 29 is a graph showing a part of the graph of FIG. 28 by enlarging the part. The horizontal axis indicates a ratio L/H of the light sources distance L with respect to the optical-axial distance H, and the vertical axis indicates a luminance variation generation ratio (uneven luminance ratio).

Excluding the data of solid lines, data of FIGs. 28 and 29 are data measured at the configuration in which the light sources and diffuser means are disposed opposite to each other by sandwiching the optical element and the diffuser sheet and prism sheet are disposed opposite to the optical element by sandwiching the diffuser means. The data of the solid lines are data measured at the state where optical element is removed from the configuration. The data shown in the diagram are data measured by using diffuser means in which total light transmittances T is individually 0.58, 0.66, 0.76, 0.79, or 0.85 (FIG. 28, 29 data supplement).

In the configuration in which the optical element is disposed, light emitted from the light sources, which passes the optical element and reaches the diffuser means, are diffused by the diffuser means, excluding a part of the light, and are emitted toward the diffuser sheet and prism sheet. A part of the emitted light is reflected and returned to the diffuser means, and diffused by the diffuser means and optical element and emitted again toward the diffuser sheet and prism sheet.

FIGs. 28 and 29 have confirmed that the luminance variation generation ratio is remarkably reduced when using the optical element, as compared to the luminance variation generation ratio when not using optical element.

Further, it was found that, when the optical element is used and L/H is in the range shown in the diagram, by using the diffuser means having a total light transmittance T shown in the diagram, the luminance variation generation ratio is lowered. It has been found that the luminance variation generation ratio is largely reduced especially when the diffuser means having a total light transmittance T of 0.66 to 0.85 (data supplement) is used. Therefore, when the diffuser means has a total light transmittance T of 0.66 to 0.85, the diffuser means can exhibit maximum function to average the angle distribution of the diffuser means while suppressing the luminance variations.

It is presumed that, when the total light transmittance T of the diffuser means becomes high, the amount of the light returning from the diffuser sheet and prism sheet to the light source side by exceeding diffuser means becomes large, and the amount of the light diffused by the diffuser means and optical element is increased, thereby lowering the luminance variation generation ratio.

In the surface emitting device, as described above, when L/H is in the large range, for example, L/H is in the range of from 2.8 to less than 3.5, the luminance in positions of x = 0, namely, in positions immediately above the light sources becomes high, and the luminance variations are likely to be caused. Therefore, it is desired that, among the light being emitted from the optical element to the diffuser means and being around positions of x = 0, the light returning to the optical element is increased in amount. When, among the light being emitted from the optical element to the diffuser means and being around positions of x = 0, the light returning to the optical element is increased in amount, the front luminance distribution is likely to be in a shape shown in FIG. 9 such that the luminance level has a minimum value at positions immediately above the light sources.

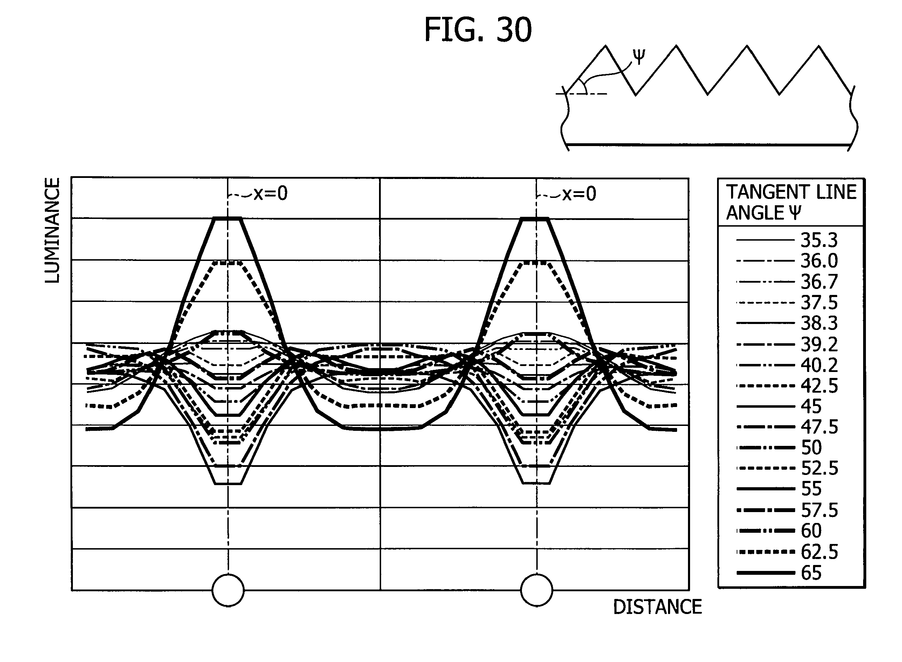

FIG. 30 is a graph showing the luminance distribution under L/H = 3.7, when using an optical element having a luminance distribution-forming layer constituted of structure portions each having a shape of isosceles triangle, and shows data when a plurality of optical elements having different tangent line angles ψ are used. The data of FIG. 30 are data of configuration in which the light sources and diffuser means are disposed opposite to each other by sandwiching the optical element and the diffuser sheet and prism sheet are disposed opposite to the optical element by sandwiching the diffuser means.

For example, when using an optical element formed so that the tangent line angle ψ is 65°, the luminance immediately above the light sources (x = 0) is high and the luminance between the light sources is low, and the amount of the light returning from the diffuser means to the light sources is small. When using an optical element formed so that the tangent line angle ψ is, for example, 45°, the luminance immediately above the light sources (x = 0) is low and the luminance between the light sources is high, and the amount of the light returning from the diffuser means to the light sources is large.

As described above, when L/H is in the large range, it is desirable that, among the light around positions of x = 0, the amounts of light returning to the optical element are increased, and the data of FIG. 30 have confirmed that the tangent line angle ψ of the structure portions for increasing the amount of the light returning to the optical element is desirably in the range of 39 to 59°.

Therefore, when L/H is in the large range, i.e., in the range of from 2.8 to less than 3.5, by using an optical element constituted of structure portions having a tangent line angle ψ of 39 to 59°, the luminance variations may be suppressed.

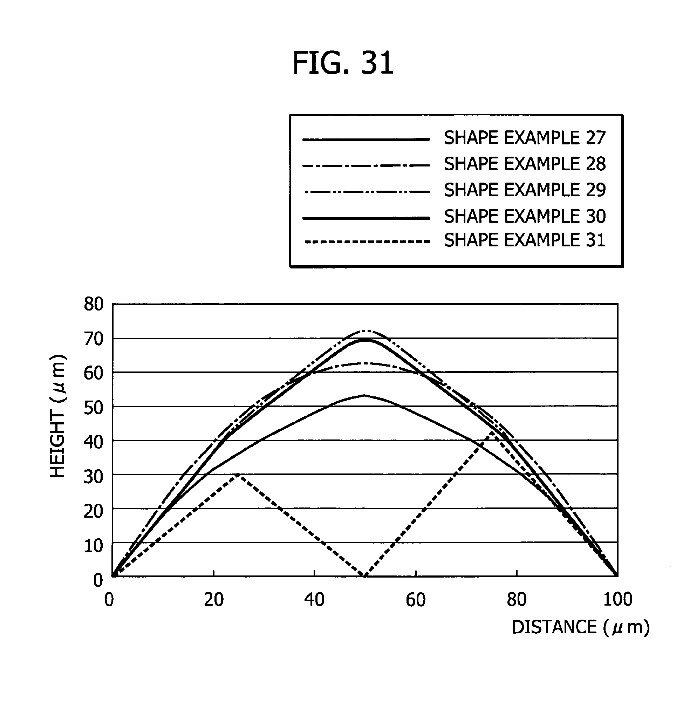

FIG. 31 is a diagram showing examples of cross-sections of the structure portions in the luminance distribution-forming layer (shape examples 27 to 31), in which the luminance distribution as viewed from any angle becomes substantially constant, irrespective of the moving distance x. FIG. 31 shows examples in which L/H is 2.8 to less than 3.5 and a diffuser means (diffusion plate) having a total light transmittance of (supplement) 66% is used.

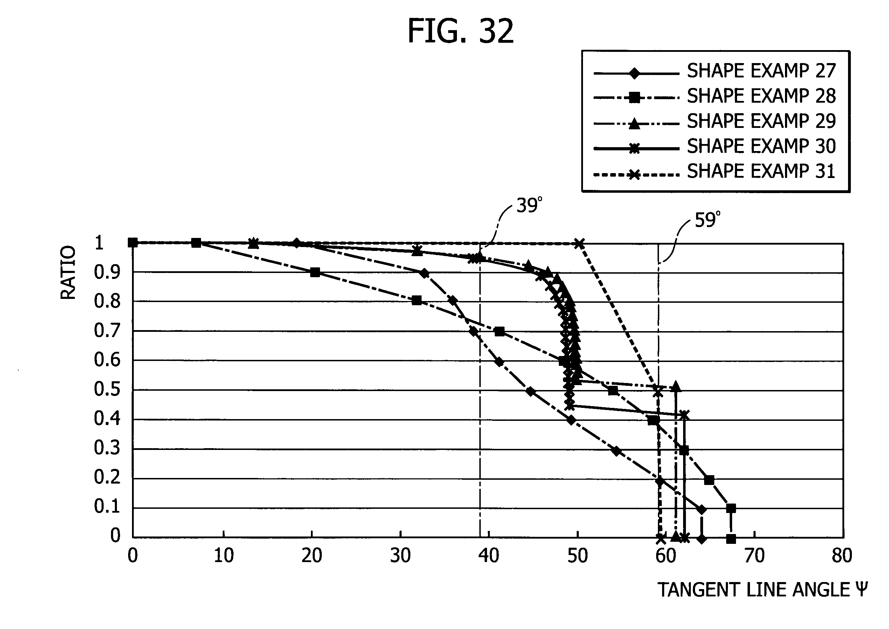

FIG. 32 is a graph showing the relationship between a tangent line angle ψ and a ratio of tangent line angles equal to or larger than the tangent line angle ψ with respect to the shape examples shown in FIG. 31. With respect to the shape examples 27 to 31, a ratio Q of a portion having a tangent line angle ψ of 39° to 59° is 0.44 in the shape example 27, 0.37 in the shape example 28, 0.42 in the shape example 29, 0.51 in the shape example 30, and 0.50 in the shape example 31.

As similar with the above-described ratio P, when array direction component of cross section of structure portion of the whole of the outer surfaces J of the cross-sections of the structure portions at a direction lined with the structure portions (see FIG. 2), is taken as 1, the ratio Q is the ratio of a portion having a tangent line angle ψ, in which ratio of array direction component of cross section of structure portion is 39° or above and 59° or less with respect to the whole of the outer surfaces J.

With respect to the outer surfaces of the cross-sections of the structure portions at a direction lined with the structure portions, out of portions excluding portions having a tangent line angle ψ in which ratio of array direction component of cross section of structure portion is 39° or above and 59° or less, the ratio of a portion having a tangent line angle ψ in which ratio of array direction component of cross section of structure portion is more than 59° is taken as a ratio R. A ratio R is 0.36 in the shape example 27, 0.59 in the shape example 28, 0.90 in the shape example 29, 0.86 in the shape example 30, and 1.00 in the shape example 31.

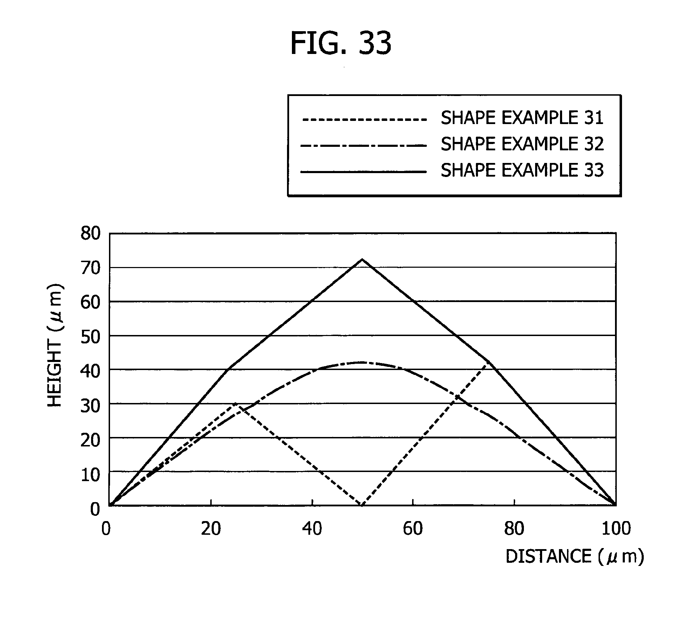

FIG. 33 is a diagram showing examples of cross-sections of the structure portions in the luminance distribution-forming layer (shape examples 31 to 33), in which the luminance distribution as viewed from any angle becomes substantially constant, irrespective of the moving distance x. As similar with the shape examples shown in FIG. 31, FIG. 33 shows examples in which L/H is 2.8 to less than 3.5 and a diffuser means (diffusion plate) having a total light transmittance of (supplement) 66% is used. It is noted that the shape example 31 shown in FIG. 33 is the same as the shape example 31 shown in FIG. 31 and is shown in a diagram for comparing with the shape example 32.

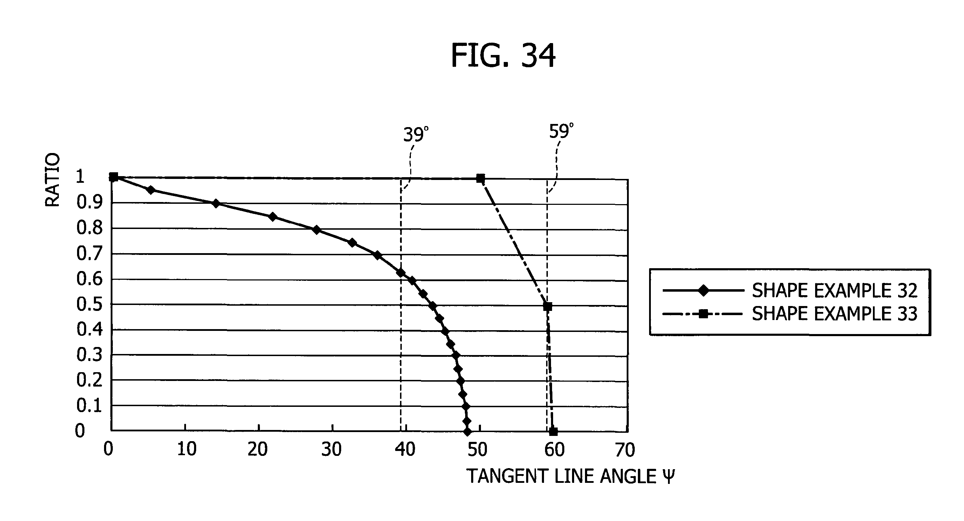

FIG. 34 is a graph showing the relationship between a tangent line angle ψ and a ratio of tangent line angles equal to or larger than the tangent line angle ψ with respect to the shape examples 32 and 33 shown in FIG. 33. With respect to the shape examples 32 and 33, a ratio Q of a portion having a tangent line angle ψ of 39° or above and 59° is 0.63 in the shape example 32 and 0.50 in the shape example 33. (FIG. 34 data supplement)

A ratio R is 0% in the shape example 32 and 100% in the shape example 33.

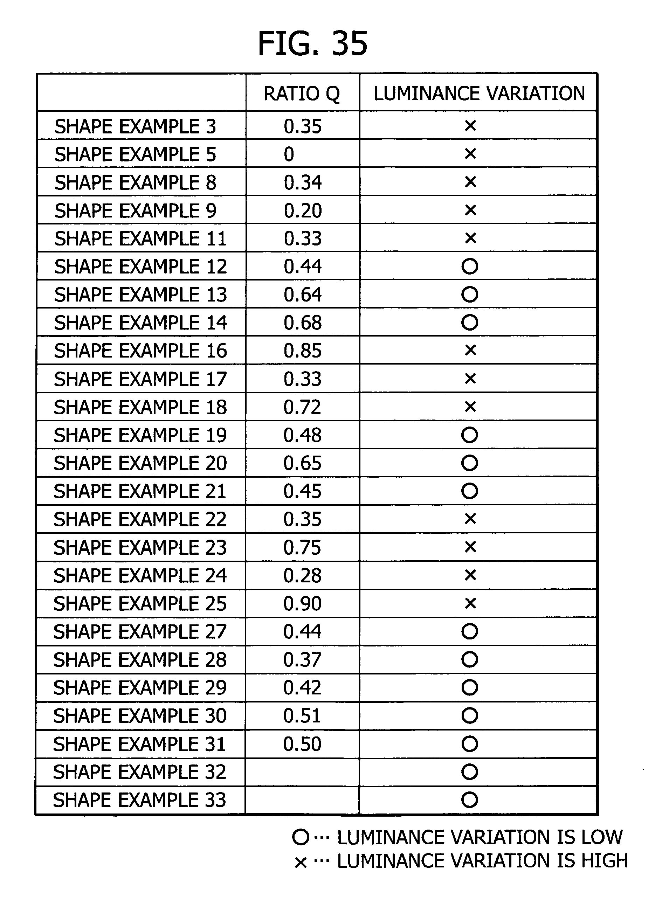

FIG. 35 is a table showing a ratio Q of a portion having a tangent line angle ψ of 39° to 59° and the luminance variation generation with respect to each of the shape examples 3, 5, 8, 9, 11 to 14, and 16 to 25, in addition to the shape examples 27 to 33. As shown in FIG. 35, in the shape examples in which the ratio Q is 0.37 to 0.68, the luminance variation is small, whereas, in the shape examples in which the ratio Q is less than 0.37 or 0.72 or more, the luminance variation becomes large.

Therefore, when L/H is in the range from 2.8 to less than 3.5, and the ratio Q of a portion having a tangent line angle $\psi$, in which ratio of array direction component of a cross-section of the structure portion of outer surface portion of cross-section of the structure portion at a direction lined with the structure portion becomes 39° or above and 59° or less, satisfies the formula: $0.37 \leqq Q \leqq 0.70$, whereby the luminance variations may be suppressed.

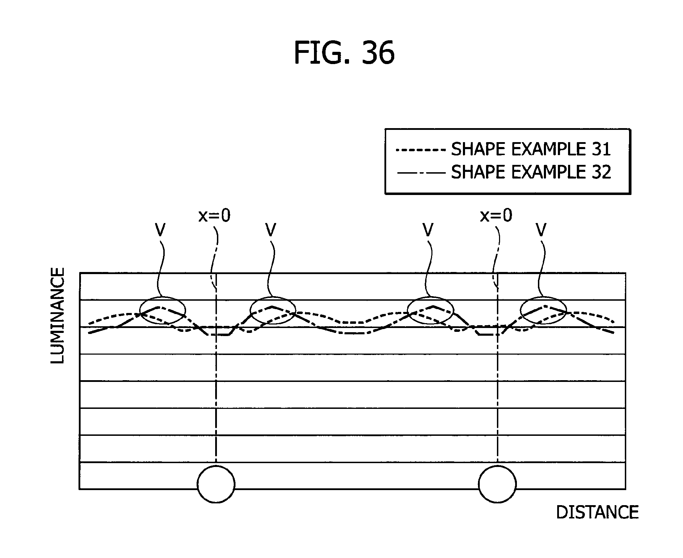

FIG. 36 is a graph showing, for example, the shape examples 31 and 32 in respect of the luminance distribution by comparison. In the shape example 31, the ratio Q is 0.50 and the ratio R is 1.00. In the shape example 32, the ratio Q is 0.63, and the ratio R is 0. The ratio R of the shape example 31 is larger than the ratio R of the shape example 32.

As shown by indications V, V, ... in FIG. 36, in the luminance distribution in the shape example 31, the rising degree of the luminance immediately on the side of the light source relative to the luminance immediately above the light source (x = 0) is gentle, whereas, in the luminance distribution in the shape example 32, the rising degree of the luminance immediately on the side of the light source relative to the luminance immediately above the light source (x = 0) is sharp. Therefore, as described above, when the ratio Q is in the range of from 0.37 to 0.70, the luminance variations may be suppressed, but, for further lowering the contrast around portions immediately above the light sources to more surely suppress the luminance variations, it is desirable that the ratio R is high.

Shape examples in which the contrast around portions immediately above the light sources can be further lowered to further suppress the luminance variations include the shape example 29 in which the ratio R is 0.90, the shape example 30 in which the ratio R is 0.86, and the shape example 33 in which the ratio R is 1.0, in addition to the shape example 31 in which the ratio R is 1.00. Therefore, when the ratio R of a portion having a tangent line angle $\psi$ of more than 59° out of a portion excluding the portion having a tangent line angle $\psi$ of 39 to 59° is 0.80 or more, the luminance variations may be further suppressed.

In the surface emitting device 10, by forming the luminance distribution-forming layer 18 in the optical element 15 so that the cross-section (outer surface) of the layer has a desired curved shape, the luminance can be suppressed from being uneven, but in many cases, it is difficult to form the luminance distribution-forming layer 18 into a curved shape from the processing reasons. Therefore, the luminance distribution-forming layer 18 is formed in the shape of polygon described below, which approximates to a curved shape, thus suppressing the luminance from being uneven while securing good processability.

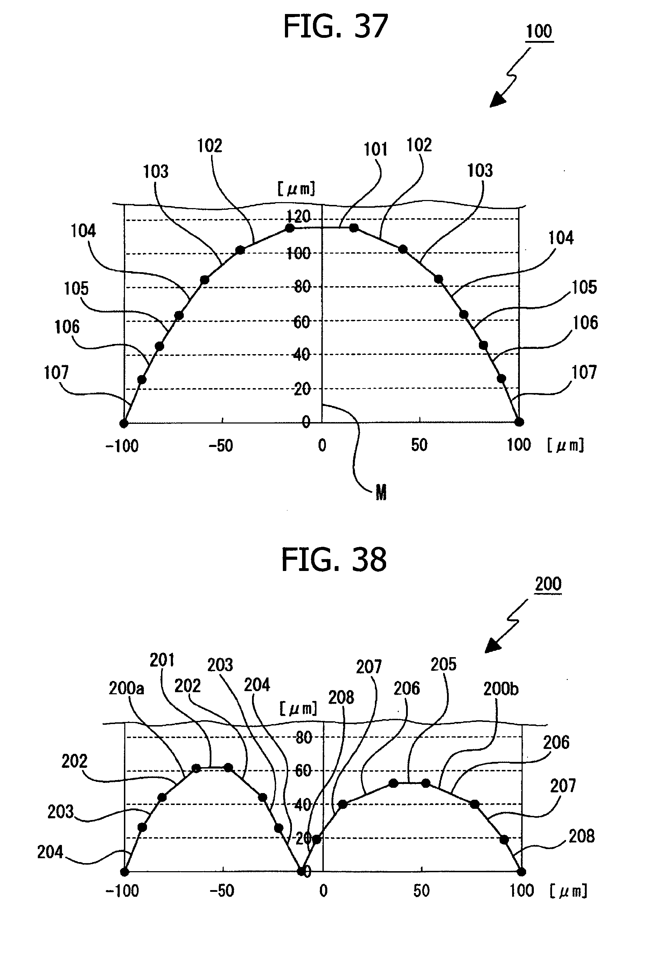

Examples of cross-sections of the luminance distribution-forming layer 18 in the optical element 15 are described below (see FIGs. 37 to 39).

FIG. 37 shows an example 100 of a luminance distribution-forming layer 18 having a shape of polygosn.

The luminance distribution-forming layer 100 is constituted of an outer surface 101 parallel to the array direction of the light sources, and outer surfaces 102, 102, 103, 103, ..., 107, 107 individually having slope angles with respect to the array direction of the light sources, the slope angle becoming large as outer surface getting close to the light source based on the outer surface 101. The luminance distribution-forming layer 100 has a shape which is line symmetrical in the array direction of the light sources based on a middle line M crossing the point which divides the outer surface 101 into two halves.

The luminance distribution-forming layer 100 is formed from, for example, thirteen (13) outer surfaces (line segments) having different slope angles, but the number of the outer surfaces is not limited to 13, and the number of the outer surfaces can be arbitrarily determined by taking into consideration of the light sources distance L or the like.

When the luminance distribution-forming layer 100 having a cross-section in the shape of polygon which approximates to a curved shape as shown in FIG. 37 is used, there is no need to form a curved shape which is generally difficult to form, whereby the luminance variations may be suppressed while securing good processability of the optical element.

Further, when the outer surface 101 parallel to the array direction of the light sources is formed, the minimum value $\phi_0$ of the front luminance $\phi$ may be easily controlled.

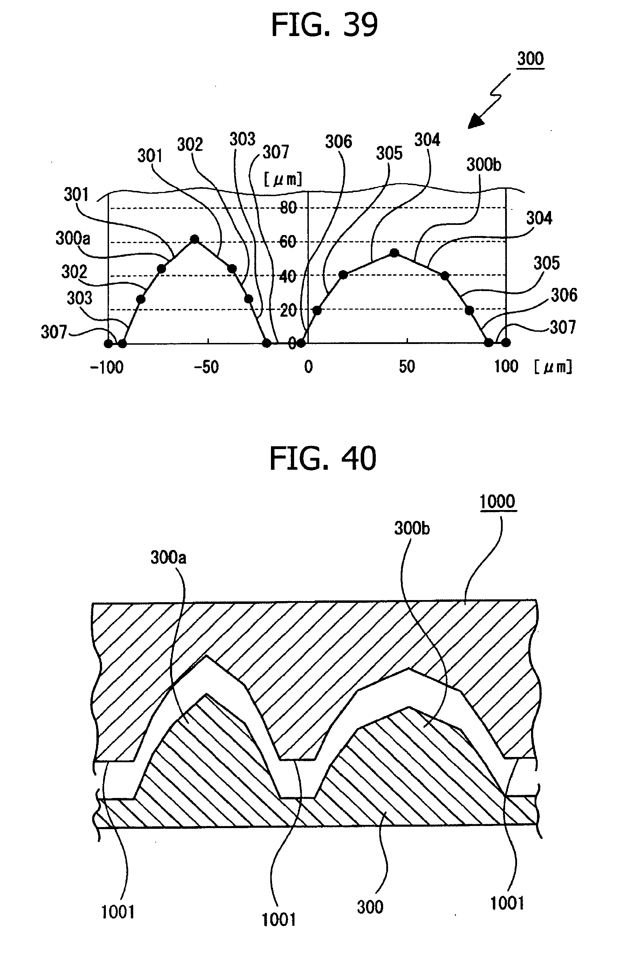

FIGs. 38 and 39 respectively show luminance distribution-forming layers 200, 300 as examples of the luminance distribution-forming layer having a plurality of structure portions obtained by dividing the shape of polygon shown in FIG. 37.

The luminance distribution-forming layer 200 shown in FIG. 38 has two structure portions 200a, 200b which are alternately arrayed.

The structure portion 200a has, for example, seven outer surfaces, and includes surfaces 201, 202, 202, 203, 203, 204, 204. The structure portion 200b also has, for example, seven outer surfaces, and includes outer surfaces 205, 206, 206, 207, 207, 208, 208.

The outer surfaces 201, 205 are parallel to the array direction of the light sources. The slope angles with respect to the outer surfaces 202, 203, 204 to the array direction of the light sources are, respectively, the same as those of the outer surfaces 103, 105, 107 of the luminance distribution-forming layer 100, and the slope angles with respect to the outer surfaces 206, 207, 208 to the array direction of the light sources are, respectively, the same as those of the outer surfaces 102, 104, 106 of the luminance distribution-forming layer 100.

When using the luminance distribution-forming layer 200 formed of the structure portions 200a, 200b, 200a, 200b, ..., which are obtained by dividing the shape of the luminance distribution-forming layer 100, the number of the outer surfaces of each of the structure portions 200a, 200b is small, whereby the processing of optical element can be made easily.

The luminance distribution-forming layer 300 shown in FIG. 39 has two structure portions 300a, 300b which are alternately disposed.

The structure portion 300a has, for example, six outer surfaces, and is formed of outer surfaces 301, 301, 302, 302, 303, 303. The structure portion 300b also has, for example, six outer surfaces, and is formed of outer surfaces 304, 304, 305, 305, 306, 306.

The slope angles of the outer surfaces 301, 302, 303 with respect to the array direction of the light sources are, respectively, the same as those of the outer surfaces 103, 105, 107 of the luminance distribution-forming layer 100, and the slope angles of the outer surfaces 304, 305, 306 with respect to the array direction of the light sources are, respectively, the same as those of the outer surfaces 102, 104, 106 of the luminance distribution-forming layer 100.

Between the structure portions 300a and 300b, a parallel plane 307 which is parallel to the array direction of the light sources is formed. The parallel plane 307 corresponds to the outer surface 101 of the luminance distribution-forming layer 100.

When using the luminance distribution-forming layer 300 formed of the structure portions 300a, 300b, 300a, 300b, ..., which are obtained by dividing the shape of the luminance distribution-forming layer 100, the number of the outer surfaces of each of the structure portions 300a, 300b is small, whereby the processing of optical element can be made easily.

When the luminance distribution-forming layer 300 is employed, an optical element is formed by injection molding using, for example, a mold 1000. As shown in FIG. 40, in the mold 1000, a protrusion 1001 is present between the portions for molding the structure portion 300a and structure portion 300b, and the protrusion 1001 has a certain width in the array direction of the light sources and hence exhibits high stiffness. Therefore, deformation is unlikely to be caused to the protrusion 1001 and release of the mold 1000 can be made smoothly, whereby the processing accuracy of the molded luminance distribution-forming layer 300 may be improved.

The luminance distribution-forming layers having two types of structure portions successively forming a plurality of arrays, are described above as examples, but the division number of the shape of polygon is not limited to two, but the number may be three or more. These structures are obtained by dividing the shape of polygon into a plurality of structure portions, and exhibit not a great difference in optical properties as those of the undivided luminance distribution-forming layer 100, and the structure can be arbitrarily selected by taking into consideration of processability.

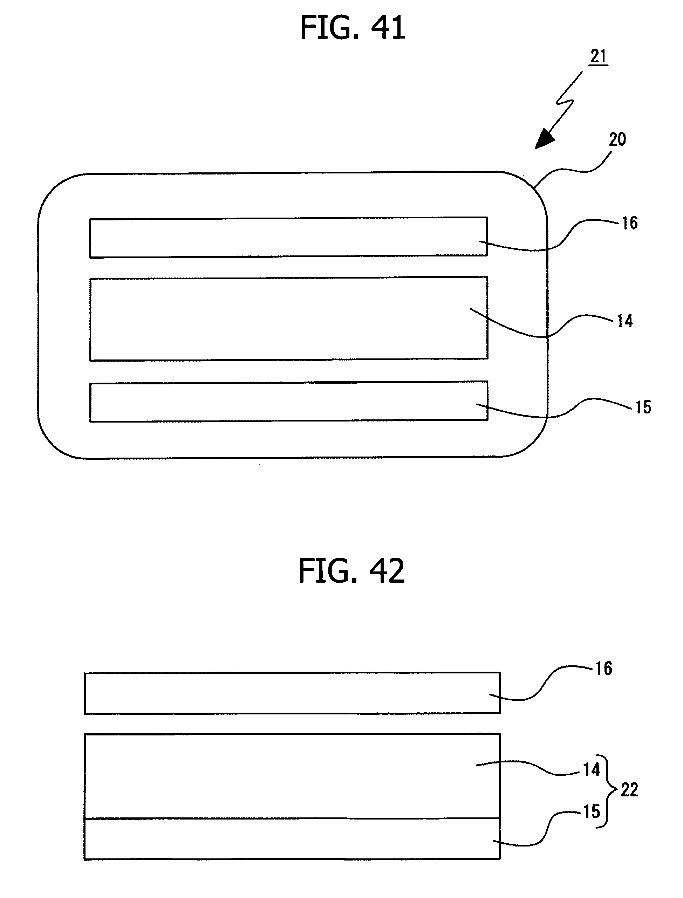

Next, an optical element package and a bonded optical element having a structure in which the optical element 15 and diffuser means 14 are integrated are described (see FIGs. 41 and 42).

As described above, in the surface emitting device 10, the optical element 15, diffuser means 14, and optical element group 16 are disposed in this order from the light sources 12, 12, ... side, and, depending on the thicknesses of the parts, it is possible that stiffness is low to cause warpage or waviness, el al, thereby contributing to cause uneven luminance.

For preventing the occurrence of warpage or waviness, the optical element 15 and diffuser means 14, or the optical element 15, diffuser means 14, and optical element group 16 may be wrapped by a packaging member 20, such as a transparent sheet or a transparent film, to form an optical element package 21 (see FIG. 41).

Alternatively, for example, the optical element 15 and diffuser means 14 may be bonded by using an ultraviolet curing resin, a pressure-sensitive adhesive, and the like to form a bonded optical element 22 (see FIG. 42). In this case, in addition to the optical element 15, the optical element group 16 can be bonded with the diffuser means 14 to form a bonded optical element 22.

When the optical element package 21 or the bonded optical element 22 is formed, the stiffness may be improved by increasing the thickness, thereby preventing the occurrence of warpage, waviness, and the like.

In the optical element package 21 or the bonded optical element 22, the optical element 15 is arranged to have a thickness d1 in the range from 0.05mm to 0.40 mm and the diffuser means 14 is arrange d to have a thickness d2 in the range from 1.0mm to 2.5 mm. Even when the optical element 15 having a small thickness and small stiffness is used, the diffuser means 14 having a large thickness is used to form an the optical element package 21 or the bonded optical element 22, so that the optical element 15 may be disposed near to the light sources 12, 12, ....

When the optical element 15 is formed by having a thickness d1 as small as in the range from 0.05mm to 0.40 mm, and by integrating the substrate 17 with the luminance distribution-forming layer 18 by, e.g., melt extrusion, not only can the cost for materials be reduced to lower the production cost, but also the form transfer properties can be enhanced to improve the molding accuracy of the luminance distribution-forming layer 18.

Further, when the optical element 15 is formed by having a thickness d1 as small as in the range from 0.05mm to 0.40 mm, for example, and by bonding the luminance distribution-forming layer 18 with the substrate 17 by use of an ultraviolet curing resin, the thick substrate 17, such as a biaxially drawn PET film is not required to be formed, thereby making it possible to achieve reduction in thickness and production cost.

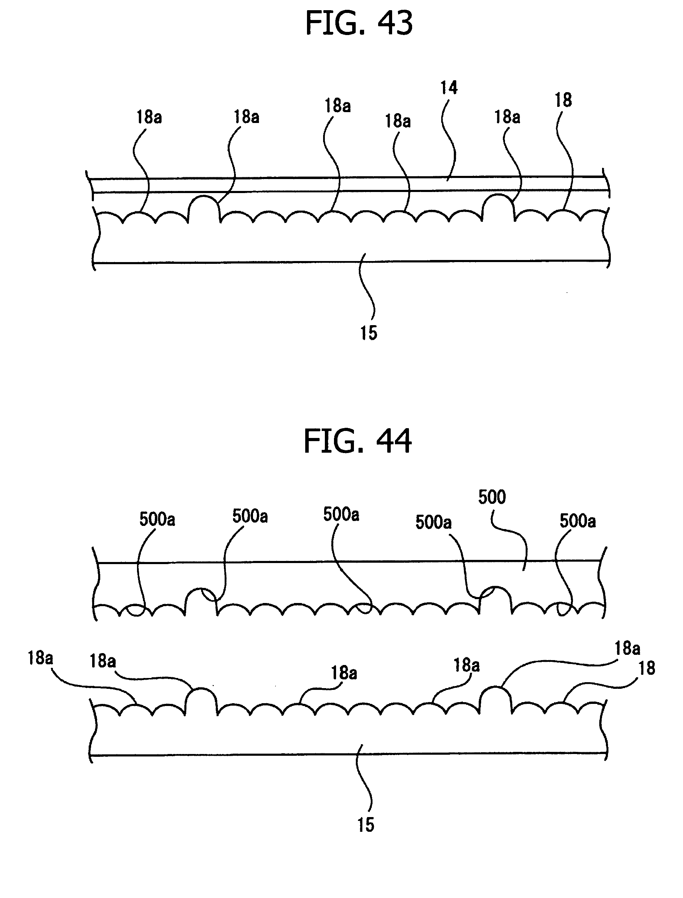

In addition, the optical element 15 may be formed so that a part of the structure portions 18a, 18a, ... in the luminance distribution-forming layer 18 has different size (see FIG. 43). For example, the optical element can be formed such that the height in the optical axis direction of a part of the structure portions 18a, 18a, ... becomes higher than that of the other structure portions 18a, 18a, .... By forming the optical element 15, even when the diffuser means 14 disposed on the side of the luminance distribution-forming layer 18 and the optical element 15 accidentally contact with each other, the contact area between both can be reduced.

Thus the contact area between the diffuser means 14 and the optical element 15 is reduced, making it possible to suppress damages caused between the structure portions 18a, 18a, ... and the diffuser means 14.

The above-described shape can be formed by using a mold 500 for forming the optical element 15 such that, for example, as shown in FIG. 44, a part of grooves 500a for forming has deep concave shape.

The specific shapes and structures for the individual parts described in the above best mode are merely an example for carrying out the present invention, and the technical scope of the present invention should not construed limitedly by the example.

It should be understood by those skilled in the art that various modifications, combinations, sub-combinations and alterations may occur depending on design requirements and other factors insofar as they are within the scope of the appended claims or the equivalents thereof.

The present document contains subject matter related to Japanese Patent Application No.2007-217528 filed in the Japanese Patent Office on August 23, 2007, the entire content of which being incorporated herein by reference.

## Claims

1. A surface emitting device comprising:

    a plurality of light sources disposed on an identical plane;
    an optical element having translucent properties and having formed thereon a luminance distribution-forming layer for suppressing luminance variations of a light emitted from the plurality of light sources;
    a reflective surface for reflecting a light emitted from the plurality of light sources, the reflective surface being disposed opposite to the optical element by sandwiching the plurality of light sources with an air layer in between the reflective surface and the optical element; and
    a diffuser means for diffusing the light emitted from the plurality of light sources, the diffuser means being disposed opposite to the plurality of light sources by sandwiching the optical element, wherein;
    based on assumption that L represents a distance between the centers of the light sources adjacent to each other (light sources distance),
    H represents a distance from the center of the light source to the optical element in the optical axis direction (optical-axial distance),
    x represents a moving distance in the direction from a light source to an adjacent light source,
    $\phi$ represents a front luminance, on the optical element, of the light emitted from the light sources and passed through the optical element, and
    $\phi_{max}$ represents the maximum value of the front luminance $\phi$ on the optical element,

    when L/H is in the range from 1.8 to 2.3, the front luminance $\phi$ under x = L/2 takes a minimum value $\phi_0$, and the following formula is satisfied:

$$0.65 \cdot \phi_{max} \leqq \phi_0 \leqq 0.85 \cdot \phi_{max}.$$

2. A surface emitting device comprising:

    a plurality of light sources disposed on an identical plane;
    an optical element having translucent properties and having formed thereon a luminance distribution-forming layer for suppressing luminance variations of a light emitted from the plurality of light sources;
    a reflective surface for reflecting a light emitted from the plurality of light sources, the reflective surface being disposed opposite to the optical element by sandwiching the plurality of light sources with an air layer in between the reflective surface and the optical element; and

a diffuser means for diffusing the light emitted from the plurality of light sources, the diffuser means being disposed opposite to the plurality of light sources by sandwiching the optical element, wherein;

based on assumption that L represents a distance between the centers of the light sources adjacent to each other (light sources distance),

H represents a distance from the center of the light source to the optical element in the optical axis direction (optical-axial distance),

x represents a moving distance in the direction from a light source to an adjacent light source,

$\phi$ represents a front luminance, on the optical element, of the light emitted from the light sources and passed through the optical element, and

$\phi_{max}$ represents the maximum value of the front luminance $\phi$ on the optical element,

when L/H is in the range from 2.8 to 4.2, the front luminance $\phi$ under x = L/2 takes a minimum value $\phi_0$, and the front luminance $\phi$ under x = 0 takes a minimum value $\phi_1$, and the following formulas are satisfied:

$$0.65 \cdot \phi_{max} \leqq \phi_0 \leqq 0.85 \cdot \phi_{max},$$

and

$$\phi_0 < \phi_1.$$

3. The surface emitting device according to claim 1, wherein; the luminance distribution-forming layer in the optical element is constituted of a plurality of structure portions provided such that the structure portions protrude in the optical axis direction of the light emitted from the light sources and lined in the array direction of the plurality of light sources, and

based on assumption that a tangent line angle $\psi$ represents an angle between a tangent line tangent to the outer surface of the structure portion and a plane perpendicular to the optical axis, at a cross-section in a direction lined with structure portion in the luminance distribution-forming layer, and

"a" represents the maximum tangent line angle out of the tangent line angle $\psi$,

when L/H is in the range from 1.8 to 2.3, the following formula is satisfied:

$$35° + 5° \cdot L/H \leqq a \leqq 50° + 5° \cdot L/H$$

wherein, the ratio P of a portion having a tangent line angle $\psi$, in which ratio of array direction component of a cross-section of the structure portion of outer surface portion of cross-section of the structure portion at a direction lined with the structure portion becomes 40° or above and "a" or less with respect to array direction component of a cross-section of the structure portion of outer surface of a cross-section of the structure portion, satisfies the following formula:

$$0.15 \leqq P \leqq 0.45.$$

4. The surface emitting device according to claim 2, wherein; the luminance distribution-forming layer in the optical element is constituted of a plurality of structure portions provided such that the structure portions protrude in the optical axis direction of the light emitted from the light sources and lined in the array direction of the plurality of light sources, and

based on assumption that a tangent line angle $\psi$ represents an angle formed between a tangent line tangent to the outer surface of the structure portion and a plane perpendicular to the optical axis, at a cross-section in a direction lined with structure portion in the luminance distribution-forming layer, and
"a" represents the maximum tangent line angle out of the tangent line angle $\psi$,
when L/H is in the range from 2.8 to 4.2, the following formula is satisfied:

$$35° + 5° \cdot L/H \leqq a \leqq (\text{Smaller angle selected from } 50° + 5° \cdot L/H \text{ and } 65°)$$

when L/H is in the range from 2.8 to 3.5, ration P of a portion having a tangent line angle $\psi$ in which ratio of array direction component of a cross-section of the structure portion of outer surface portion of cross-section of the structure portion at a direction lined with the structure portion becomes 40° or above and "a" or less with respect to array direction component of a cross-section of the structure portion of outer surface of a cross-section of the structure portion, satisfies the following formula:

$$0.55 \leqq P \leqq 0.70$$

wherein, when L/H is in the range from 3.5 to 4.2, the ratio P of a portion having a tangent line angle $\psi$, in which ratio of array direction component of a cross-section of the structure portion of outer surface portion of cross-section of the structure portion at a direction lined with the structure portion becomes 40° or above and "a" or less with respect to array direction component of a cross-section of the structure portion of outer surface of a cross-section of the structure portion, satisfies the following formula:

$$0.60 \leqq P \leqq 0.75.$$

5. The surface emitting device according to claim 1, wherein; the diffuser means has a total light transmittance T in the range from 0.55 to 0.85.
   Standard of a total light transmittance being JIS K 7361.

6. The surface emitting device according to claim 2, wherein; the diffuser means has a total light transmittance T in the range from 0.55 to 0.85.

7. The surface emitting device according to claim 1, wherein; the diffuser means has a total light transmittance T in the range from 0.66 to 0.85.

8. The surface emitting device according to claim 2, wherein; the diffuser means has a total light transmittance T in the range from 0.66 to 0.85.

9. The surface emitting device according to claim 3, wherein; the structure portions have outer surfaces formed in the shape of a polygon.

10. The surface emitting device according to claim 4, wherein; the structure portions have outer surfaces formed in the shape of a polygon.

11. The surface emitting device according to claim 3, wherein; a plane perpendicular to the optical axis is formed between the structure portions adjacent to each other.

12. The surface emitting device according to claim 4, wherein; a plane perpendicular to the optical axis is formed between the structure portions adjacent to each other.

13. The surface emitting device according to claim 3, wherein; the structure portions have formed therein a plane perpendicular to the optical axis.

14. The surface emitting device according to claim 4, wherein; the structure portions have formed therein a plane perpendicular to the optical axis.

15. The surface emitting device according to claim 1, wherein;
at least one optical element different from the optical element is disposed opposite to the optical element by sandwiching the diffuser means, and
an optical element package in which the diffuser means and the respective optical elements disposed on both sides of the diffuser means are covered by a packaging member, is provided.

16. The surface emitting device according to claim 2, wherein;
at least one optical element different from the optical element is disposed opposite to the optical element by sandwiching the diffuser means, and
an optical element package in which the diffuser means and the respective optical elements disposed on both sides of the diffuser means are covered by a packaging member, is provided.

17. The surface emitting device according to claim 1, wherein; the diffuser means and a bonded optical element formed by bonding the optical element are provided.

18. The surface emitting device according to claim 2, wherein; the diffuser means and a bonded optical element formed by bonding the optical element are provided.

19. The surface emitting device according to claim 17, wherein;
the optical element has a thickness d1 in the range from 0.05mm to 0.40 mm, and the diffuser means has a thickness d2 in the range from 1.0mm to 2.5 mm.

20. The surface emitting device according to claim 18, wherein; the optical element has a thickness d1 in the range from 0.05mm to 0.40 mm, and the diffuser means has a thickness d2 in the range from 1.0mm to 2.5 mm.

21. A liquid crystal display device comprising:

a plurality of light sources disposed on an identical plane;
an optical element having light transmission properties and having formed thereon a luminance distribution-forming layer for suppressing luminance variations of light emitted from the plurality of light sources;
a reflective surface for reflecting the light emitted from the plurality of light sources, the reflective surface being disposed opposite to the optical element by sandwiching the plurality of light sources with an air layer in between the reflective surface and the optical element;
a diffuser means for diffusing the light emitted from the plurality of light sources, the diffuser means being disposed opposite to the plurality of light sources by sandwiching the optical element; and
a liquid crystal panel displaying an image and being irradiated with the light emitted from the plurality of light sources, wherein;
based on assumption L represents a distance
between
the centers of the light sources adjacent to each other (light sources distance),
H represents a distance from the center of the light
source to the optical element in the optical axis direction (optical-axial distance),
x represents a moving distance in the direction from the light source to the adjacent light source,
$\phi$ represents a front luminance, on the optical element, of the light emitted from the light sources and passed through the optical element, and
$\phi_{max}$ represents the maximum value of the front luminance $\phi$ on the optical element,

when L/H is in the range from 1.8 to 2.3, the front luminance $\phi$ under x = L/2 takes a minimum value $\phi_0$, and the following formula is satisfied:

$$0.65 \cdot \phi_{max} \leqq \phi_0 \leqq 0.85 \cdot \phi_{max}.$$

22. A liquid crystal display device comprising:

a plurality of light sources disposed on an identical plane;
an optical element having light transmission properties and having formed thereon a luminance distribution-forming layer for suppressing luminance variations of light emitted from the plurality of light sources;
a reflective surface for reflecting the light emitted from the plurality of light sources, the reflective surface being disposed opposite to the optical element by sandwiching the plurality of light sources with an air layer in between the reflective surface and the optical element;
a diffuser means for diffusing the light emitted from the plurality of light sources, the diffuser means being disposed opposite to the plurality of light sources by sandwiching the optical element; and
a liquid crystal panel displaying an image and being irradiated with the light emitted from the plurality of light sources, wherein;
based on assumption L represents a distance
between
the centers of the light sources adjacent to each other (light sources distance),
H represents a distance from the center of the light
source to the optical element in the optical axis direction (optical-axial distance),
x represents a moving distance in the direction from the light source to the adjacent light source,
$\phi$ represents a front luminance, on the optical element, of the light emitted from the light sources and passed through the optical element, and
$\phi_{max}$ represents the maximum value of the front luminance $\phi$ on the optical element,

when L/H is in the range from 2.8 to 4.2, the front luminance $\phi$ under x = L/2 takes a minimum value $\phi_0$, the front luminance $\phi$ under x = 0 takes a minimum value $\phi_1$ and the following formulas are satisfied:

$$0.65 \cdot \phi_{max} \leqq \phi_0 \leqq 0.85 \cdot \phi_{max}$$

and

$$\phi_0 < \phi_1.$$

23. A surface emitting device comprising:

a plurality of light sources disposed on an identical plane;
an optical element having translucent properties and having formed thereon a luminance distribution-forming layer for suppressing luminance variations of a light emitted from the plurality of light sources;
a reflective surface for reflecting a light emitted from the plurality of light sources, the reflective surface being disposed opposite to the optical element by sandwiching the plurality of light sources with an air layer in between the reflective surface and the optical element; and
a diffuser means for diffusing the light emitted from the plurality of light sources, the diffuser means being disposed opposite to the plurality of light sources by sandwiching the optical element, wherein;
the luminance distribution-forming layer in the optical element is constituted of a plurality of structure portions provided such that the structure portions protrude in the optical axis direction of the light emitted from the light sources and lined in the array direction of the plurality of light sources,
based on assumption that L represents a distance between the centers of the light sources adjacent to each other (light sources distance),

H represents a distance from the center of the light source to the optical element in the optical axis direction (optical-axial distance),

x represents a moving distance in the direction from a light source to an adjacent light source,

a tangent line angle ψ represents an angle formed between a tangent line tangent to the outer surface of the structure portion and a plane perpendicular to the optical axis, at a cross-section in a direction lined with structure portion in the luminance distribution-forming layer,

when L/H is in the range from 2.8 to 3.5,

the ratio Q of a portion having a tangent line angle ψ in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula:

$$0.37 \leqq P \leqq 0.70.$$

24. The surface emitting device according to claim 23, wherein;
80% or more of a portion other than the portion having a tangent line angle ψ in which ratio of array direction component of a cross-section of the structure portion of outer surface portion of cross-section of the structure portion at a direction lined with the structure portion becomes 39° or above and 59° or less, has a tangent line angle ψ of more than 59°.

25. A liquid crystal display device comprising:

a plurality of light sources disposed on an identical plane;

an optical element having light transmission properties and having formed thereon a luminance distribution-forming layer for suppressing luminance variations of light emitted from the plurality of light sources;

a reflective surface for reflecting the light emitted from the plurality of light sources, the reflective surface being disposed opposite to the optical element by sandwiching the plurality of light sources with an air layer in between the reflective surface and the optical element;

a diffuser means for diffusing the light emitted from the plurality of light sources, the diffuser means being disposed opposite to the plurality of light sources by sandwiching the optical element; and

a liquid crystal panel displaying an image and being irradiated with the light emitted from the plurality of light sources, wherein;

the luminance distribution-forming layer in the optical element is constituted of a plurality of structure portions provided such that the structure portions protrude in the optical axis direction of the light emitted from the light sources and lined in the array direction of the plurality of light sources, and

based on assumption L represents a distance between

the centers of the light sources adjacent to each other (light sources distance),

H represents a distance from the center of the light

source to the optical element in the optical axis direction (optical-axial distance),

x represents a moving distance in the direction from the light source to the adjacent light source, and

a tangent line angle ψ represents an angle formed between a tangent line tangent to the outer surface of the structure portion and a plane perpendicular to the optical axis, at a cross-section in a direction lined with structure portion in the luminance distribution-forming layer,

when L/H is in the range from 2.8 to 3.5,

the ratio Q of a portion having a tangent line angle ψ in which ratio of array direction component of a cross-section of the structure portion of outer surface portion of cross-section of the structure portion at a direction lined with the structure portion becomes 39° or above and 59° or less with respect to array direction component of a cross-section of the structure portion of outer surface of a cross-section of the structure portion, satisfies the following formula:

$$0.37 \leqq P \leqq 0.70.$$

FIG. 1

FIG. 2

# FIG. 3

EP 2 028 537 A1

# FIG. 4

FRONT LUMINANCE DISTRIBUTION

OBLIQUE LUMINANCE DISTRIBUTION (30°)

OBLIQUE LUMINANCE DISTRIBUTION (15°)

OBLIQUE LUMINANCE DISTRIBUTION (45°)

OBLIQUE LUMINANCE DISTRIBUTION (60°)

LUMINANCE

MOVING DISTANCE X

18

$x=L/2$

$x=L/2$

15

12

12

12

L

L

EP 2 028 537 A1

# FIG. 5

FRONT LUMINANCE
DISTRIBUTION

OBLIQUE LUMINANCE
DISTRIBUTION (15°)

OBLIQUE LUMINANCE
DISTRIBUTION (30°)

OBLIQUE LUMINANCE
DISTRIBUTION (45°)

OBLIQUE LUMINANCE
DISTRIBUTION (60°)

LUMINANCE

MOVING
DISTANCE X

14

18

15

12          12          12

EP 2 028 537 A1

# FIG. 6

EP 2 028 537 A1

## FIG. 7

## FIG. 8

## FIG. 9

## FIG. 10

# FIG. 11

FIG. 12

FIG. 13

# FIG. 14

——————— SHAPE EXAMP 1
—··——··— SHAPE EXAMP 2
—·——·— SHAPE EXAMP 3
·-------- SHAPE EXAMP 4

RATIO (vertical axis): 1.0, 0.9, 0.8, 0.7, 0.6, 0.5, 0.4, 0.3, 0.2, 0.1, 0

P

TANGENT LINE ANGLE Ψ (horizontal axis): 0, 10, 20, 30, 40, 50, 60, 70

EP 2 028 537 A1

# FIG. 15

# FIG. 16

SHAPE EXAMP 5
SHAPE EXAMP 6
SHAPE EXAMP 7
SHAPE EXAMP 8
SHAPE EXAMP 9
SHAPE EXAMP 10
SHAPE EXAMP 11

HEIGHT ($\mu$m)

1.0 0.9 0.8 0.7 0.6 0.5 0.4 0.3 0.2 0.1 0

MOVING DISTANCE x ($\mu$m)

0 10 20 30 40 50 60 70 80

P

## FIG. 17

|  | MAXIMUM TANGENT LINE ANGLE a | FORMULA (5) | P | FORMULA (6) | MINIMUM VALUE $\phi 0$ | FORMULA (4) | LUMINANCE UNIFORMITY |
|---|---|---|---|---|---|---|---|
| SHAPE EXAMPLE 1 | 55 | ○ | 0.38 | ○ | $0.75\phi$max | ○ | ○ |
| SHAPE EXAMPLE 2 | 45 | ○ | 0.25 | ○ | $0.67\phi$max | ○ | ○ |
| SHAPE EXAMPLE 3 | 59 | ○ | 0.35 | ○ | $0.77\phi$max | ○ | ○ |
| SHAPE EXAMPLE 4 | 57 | ○ | 0.35 | ○ | $0.79\phi$max | ○ | ○ |
| SHAPE EXAMPLE 5 | 38 | × | 0 | × | $0.44\phi$max | × | × |
| SHAPE EXAMPLE 6 | 23 | × | 0 | × | $0.31\phi$max | × | × |
| SHAPE EXAMPLE 7 | 10 | × | 0 | × | $0.22\phi$max | × | × |
| SHAPE EXAMPLE 8 | 69 | × | 0.65 | × | NOT PRESENT | × | × |
| SHAPE EXAMPLE 9 | 72 | × | 0.45 | ○ | NOT PRESENT | × | × |
| SHAPE EXAMPLE 10 | 54 | ○ | 0.60 | × | NOT PRESENT | × | × |
| SHAPE EXAMPLE 11 | 64 | × | 0.48 | × | $0.90\phi$max | × | × |

EP 2 028 537 A1

# FIG. 18

SHAPE EXAMPLE 12 ———
SHAPE EXAMPLE 13 —··—··—··—
SHAPE EXAMPLE 14 ----------

EP 2 028 537 A1

# FIG. 19

———————— SHAPE EXAMP 12
—··—··— SHAPE EXAMP 13
---------- SHAPE EXAMP 14

# FIG. 20

SHAPE EXAMPLE 15 ———
SHAPE EXAMPLE 16 —··—··—··
SHAPE EXAMPLE 17 —·—·—·—
SHAPE EXAMPLE 18 ----------

EP 2 028 537 A1

# FIG. 21

—————— SHAPE EXAMP 15
—·—·—·— SHAPE EXAMP 16
—··—··—··— SHAPE EXAMP 17
············· SHAPE EXAMP 18

# FIG. 22

| | MAXIMUM TANGENT LINE ANGLE a | FORMULA (5)' | P | FORMULA (6)' | MINIMUM VALUE $\phi 0$ | FORMULA (4) | $\phi 0 < \phi 1$ | FORMULA (7) | LUMINANCE UNIFORMITY |
|---|---|---|---|---|---|---|---|---|---|
| SHAPE EXAMPLE 12 | 62 | ○ | 0.62 | ○ | 0.77 $\phi$max | ○ | $\phi 0 < \phi 1$ | ○ | ○ |
| SHAPE EXAMPLE 13 | 52 | ○ | 0.64 | ○ | 0.65 $\phi$max | ○ | $\phi 0 < \phi 1$ | ○ | ○ |
| SHAPE EXAMPLE 14 | 58 | ○ | 0.68 | ○ | 0.75 $\phi$max | ○ | $\phi 0 < \phi 1$ | ○ | ○ |
| SHAPE EXAMPLE 15 | 74 | × | 0.70 | ○ | 0.93 $\phi$max | × | $\phi 0 < \phi 1$ | ○ | × |
| SHAPE EXAMPLE 16 | 54 | ○ | 0.84 | × | 0.74 $\phi$max | ○ | $\phi 0 > \phi 1$ | × | × |
| SHAPE EXAMPLE 17 | 63 | ○ | 0.48 | × | 0.76 $\phi$max | ○ | $\phi 1$ NOT PRESENT | × | × |
| SHAPE EXAMPLE 18 | 48 | × | 0.68 | ○ | 0.59 $\phi$max | × | $\phi 0 > \phi 1$ | × | × |

EP 2 028 537 A1

FIG. 23

# FIG. 24

SHAPE EXAMP 19
SHAPE EXAMP 20
SHAPE EXAMP 21

EP 2 028 537 A1

# FIG. 25

SHAPE EXAMPLE 22
SHAPE EXAMPLE 23
SHAPE EXAMPLE 24
SHAPE EXAMPLE 25
SHAPE EXAMPLE 26

# FIG. 26

SHAPE EXAMP 22
SHAPE EXAMP 23
SHAPE EXAMP 24
SHAPE EXAMP 25
SHAPE EXAMP 26

EP 2 028 537 A1

# FIG. 27

| | MAXIMUM TANGENT LINE ANGLE a | FORMULA (5)' | P | FORMULA (6)" | MINIMUM VALUE $\phi 0$ | FORMULA (4) | $\phi 0 < \phi 1$ | FORMULA (7) | LUMINANCE UNIFORMITY |
|---|---|---|---|---|---|---|---|---|---|
| SHAPE EXAMPLE 19 | 62 | ○ | 0.70 | ○ | $0.70 \phi max$ | ○ | $\phi 0 < \phi 1$ | ○ | ○ |
| SHAPE EXAMPLE 20 | 59 | ○ | 0.73 | ○ | $0.67 \phi max$ | ○ | $\phi 0 < \phi 1$ | ○ | ○ |
| SHAPE EXAMPLE 21 | 64 | ○ | 0.61 | ○ | $0.69 \phi max$ | ○ | $\phi 0 < \phi 1$ | ○ | ○ |
| SHAPE EXAMPLE 22 | 65 | ○ | 0.77 | × | $0.77 \phi max$ | ○ | $\phi 0 > \phi 1$ | × | × |
| SHAPE EXAMPLE 23 | 52 | × | 0.73 | ○ | $0.61 \phi max$ | × | $\phi 0 < \phi 1$ | ○ | × |
| SHAPE EXAMPLE 24 | 70 | × | 0.66 | ○ | $0.91 \phi max$ | × | $\phi 0 < \phi 1$ | ○ | × |
| SHAPE EXAMPLE 25 | 53 | × | 0.88 | × | $0.60 \phi max$ | × | $\phi 0 < \phi 1$ | ○ | × |
| SHAPE EXAMPLE 26 | 62 | ○ | 0.46 | × | $0.60 \phi max$ | × | $\phi 0 < \phi 1$ | ○ | × |

# FIG. 28

EP 2 028 537 A1

EP 2 028 537 A1

FIG. 29

FIG. 30

# FIG. 31

| | |
|---|---|
| ——————— | SHAPE EXAMPLE 27 |
| —·——·——·— | SHAPE EXAMPLE 28 |
| ·——··——··— | SHAPE EXAMPLE 29 |
| **———————** | SHAPE EXAMPLE 30 |
| - - - - - - - - - | SHAPE EXAMPLE 31 |

HEIGHT ($\mu$m) vs DISTANCE ($\mu$m)

FIG. 32

# FIG. 33

## FIG. 34

# FIG. 35

| | RATIO Q | LUMINANCE VARIATION |
|---|---|---|
| SHAPE EXAMPLE 3 | 0.35 | × |
| SHAPE EXAMPLE 5 | 0 | × |
| SHAPE EXAMPLE 8 | 0.34 | × |
| SHAPE EXAMPLE 9 | 0.20 | × |
| SHAPE EXAMPLE 11 | 0.33 | × |
| SHAPE EXAMPLE 12 | 0.44 | O |
| SHAPE EXAMPLE 13 | 0.64 | O |
| SHAPE EXAMPLE 14 | 0.68 | O |
| SHAPE EXAMPLE 16 | 0.85 | × |
| SHAPE EXAMPLE 17 | 0.33 | × |
| SHAPE EXAMPLE 18 | 0.72 | × |
| SHAPE EXAMPLE 19 | 0.48 | O |
| SHAPE EXAMPLE 20 | 0.65 | O |
| SHAPE EXAMPLE 21 | 0.45 | O |
| SHAPE EXAMPLE 22 | 0.35 | × |
| SHAPE EXAMPLE 23 | 0.75 | × |
| SHAPE EXAMPLE 24 | 0.28 | × |
| SHAPE EXAMPLE 25 | 0.90 | × |
| SHAPE EXAMPLE 27 | 0.44 | O |
| SHAPE EXAMPLE 28 | 0.37 | O |
| SHAPE EXAMPLE 29 | 0.42 | O |
| SHAPE EXAMPLE 30 | 0.51 | O |
| SHAPE EXAMPLE 31 | 0.50 | O |
| SHAPE EXAMPLE 32 | | O |
| SHAPE EXAMPLE 33 | | O |

O ⋯ LUMINANCE VARIATION IS LOW
× ⋯ LUMINANCE VARIATION IS HIGH

# FIG. 36

# FIG. 37

<u>100</u>

# FIG. 38

<u>200</u>

# FIG. 39

# FIG. 40

# FIG. 41

# FIG. 42

# FIG. 43

# FIG. 44

# FIG. 45

# FIG. 46

FIG. 47

# FIG. 48

FRONT LUMINANCE
DISTRIBUTION

OBLIQUE LUMINANCE
DISTRIBUTION

LUMINANCE

POSITION

5a

5

2

2

2

EP 2 028 537 A1

FIG. 49

AVERAGING ANGLES

EP 2 028 537 A1

# FIG. 50

FRONT LUMINANCE
DISTRIBUTION

OBLIQUE LUMINANCE
DISTRIBUTION

LUMINANCE

POSITION

EP 2 028 537 A1

Europäisches
Patentamt

European
Patent Office

Office européen
des brevets

## PARTIAL EUROPEAN SEARCH REPORT

which under Rule 63 of the European Patent Convention EP 08 01 4914
shall be considered, for the purposes of subsequent
proceedings, as the European search report

**Application Number**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/066729 A (SONY CORP [JP]; OBATA KEI [JP]; HOSHI MITSUNARI [JP]) 14 June 2007 (2007-06-14) | 1,5,7, 10,13, 17,21 | INV. G02F1/13357 G02B3/00 G02B5/04 |
| A | | 2-4,6,8, 9,14-16, 18-20, 22,23,25 | |
| | -& EP 1 959 275 A (SONY CORP [JP]) 20 August 2008 (2008-08-20) * abstract * * paragraphs [0017] - [0019] * * paragraphs [0024] - [0045] * * paragraph [0058]; figures 1-3,5-7,9-12,14,15 * ----- | | |
| X | WO 2007/000962 A (KURARAY CO [JP]; HORIKOSHI SATOKO [JP]; ONISHI IKUO [JP]; KIKUYAMA SHI) 4 January 2007 (2007-01-04) | 1,21 | |
| A | | 2-10, 13-20, 22,23,25 | |
| | -/-- | | |

**TECHNICAL FIELDS SEARCHED (IPC)**

G02F
G02B

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 20 November 2008 | Wahl, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04E07)

Europäisches
Patentamt

European
Patent Office

Office européen
des brevets

## PARTIAL EUROPEAN SEARCH REPORT

Application Number

EP 08 01 4914

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| | -& EP 1 900 996 A (KURARAY CO [JP]) 19 March 2008 (2008-03-19) * abstract * * paragraphs [0022], [0023], [0033], [0036] * * paragraphs [0093] - [0099], [0105], [0109], [0117] * * paragraphs [0163], [0172], [0173]; figures 1-31; tables 1-7 * ----- | | |
| A | US 2006/262555 A1 (YI JENNIFER R [US] ET AL) 23 November 2006 (2006-11-23) * paragraphs [0006], [0008], [0024] - [0028] * * paragraphs [0038], [0043], [0044] * * paragraphs [0047] - [0056], [0061], [0062]; figures 1,2 * ----- | 1-10, 13-23,25 | |
| P,A | WO 2008/053790 A (FUJIFILM CORP [JP]; KISHINE YASUNOBU [JP]; NAGANO HIDEO [JP]; KATSUMOT) 8 May 2008 (2008-05-08) * page 2, line 5 - page 5, line 21 * * page 7, line 6 - line 22 * * page 35, line 23 - page 36, line 8 * * page 45, line 8 - page 47, line 23 * * page 55, line 3 - page 56, line 18 * * page 74, line 10 - page 85, line 11; figures 3,4,8,10,15,30-34,37-40 * ----- | 1-10, 13-23,25 | |

TECHNICAL FIELDS
SEARCHED        (IPC)

EPO FORM 1503 03.82 (P04C10)

Europäisches
Patentamt

European
Patent Office

Office européen
des brevets

**INCOMPLETE SEARCH
SHEET C**

**Application Number**

EP 08 01 4914

Claim(s) searched completely:
        1,2,5-10,13-22

Claim(s) searched incompletely:
        3,4,23,25

Claim(s) not searched:
        11,12,24

Reason for the limitation of the search:

The sole feature of claims 11 and 12 refers to ther definition of an
abstract mathematical plane without there being a structural feature
connected to it.
The wording for the definitions of parameters "P" and "Q" in claims
3,4,23 and 25 is such obscure, that no meaningful search could be
performed with respect to this feature; this also applies to the feature
of dependent claim 24 which is linked to this obscure definition.

## ANNEX TO THE EUROPEAN SEARCH REPORT
## ON EUROPEAN PATENT APPLICATION NO.

EP 08 01 4914

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2008

| Patent document cited in search report | | Publication date | Patent family member(s) | | Publication date |
|---|---|---|---|---|---|
| WO 2007066729 | A | 14-06-2007 | CN<br>EP<br>KR | 101116014 A<br>1959275 A1<br>20080077312 A | 30-01-2008<br>20-08-2008<br>22-08-2008 |
| EP 1959275 | A | 20-08-2008 | CN<br>WO<br>KR | 101116014 A<br>2007066729 A1<br>20080077312 A | 30-01-2008<br>14-06-2007<br>22-08-2008 |
| WO 2007000962 | A | 04-01-2007 | EP<br>KR | 1900996 A1<br>20080026196 A | 19-03-2008<br>24-03-2008 |
| EP 1900996 | A | 19-03-2008 | WO<br>KR | 2007000962 A1<br>20080026196 A | 04-01-2007<br>24-03-2008 |
| US 2006262555 | A1 | 23-11-2006 | WO | 2006127353 A1 | 30-11-2006 |
| WO 2008053790 | A | 08-05-2008 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5333333 A
- JP 6250178 A
- JP 10283818 A
- JP 2004006256 A
- JP 2007217528 A